(19)

Europäisches Patentamt
European Patent Office
Office européen des brevets

(11) **EP 4 330 915 B1**

(12) **EUROPEAN PATENT SPECIFICATION**

(45) Date of publication and mention
of the grant of the patent:
**11.02.2026 Bulletin 2026/07**

(21) Application number: **22815271.6**

(22) Date of filing: **31.05.2022**

(51) International Patent Classification (IPC):
**G06T 7/20** *(2017.01)* **G06T 5/50** *(2006.01)*

(52) Cooperative Patent Classification (CPC):
**G06T 7/0002; G06T 7/20;** G06T 2207/10081;
G06T 2207/10088; G06T 2207/10101;
G06T 2207/20084; G06T 2207/30101

(86) International application number:
**PCT/CN2022/096256**

(87) International publication number:
**WO 2022/253227 (08.12.2022 Gazette 2022/49)**

(54) **SYSTEMS AND METHODS FOR IMAGE CORRECTION**

SYSTEME UND VERFAHREN ZUR BILDKORREKTUR

SYSTÈMES ET PROCÉDÉS DE CORRECTION D'IMAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.05.2021 CN 202110602490
30.06.2021 CN 202110740112**

(43) Date of publication of application:
**06.03.2024 Bulletin 2024/10**

(73) Proprietor: **Shanghai United Imaging Healthcare
Co., Ltd.
Shanghai 201807 (CN)**

(72) Inventors:
• **ZHAO, Xiaofen
Shanghai 201807 (CN)**

• **ZHANG, Weikang
Shanghai 201807 (CN)**
• **TIAN, Jiao
Shanghai 201807 (CN)**
• **CAO, Wenjing
Shanghai 201807 (CN)**

(74) Representative: **Wang, Bo
Panovision IP
Ebersberger Straße 3
85570 Markt Schwaben (DE)**

(56) References cited:
CN-A- 112 150 574     JP-A- 2003 179 706
US-A1- 2003 133 623     US-A1- 2003 133 623
US-A1- 2009 322 914     US-A1- 2015 015 691
US-B2- 8 811 707

**Description**

**TECHNICAL FIELD**

This disclosure generally relates to medical imaging technology, and more particularly, to systems and methods for image correction.

**BACKGROUND**

With the development of medical imaging technology, artifact removal for an image is becoming more and more important in medical image processing. For an image acquired by an imaging system with a modality of a magnetic resonance imaging (MRI), a magnetic resonance angiography (MRA), a computed tomography (CT), a positron emission tomography (PET), etc., multiple factors (e.g., an uneven sensitivity of a magnetic field or coil, an uneven display of contrast agent, a patient positioning, a motion of a target region, etc.) may cause a poor or bad image effect of the image, which in turn increases the difficulty in diagnosis. For example, in a coronary artery CT angiography (CTA), the pulsation of a coronary artery may usually lead to motion artifacts in a CTA image, which in turn affects the diagnosis result. US 8,811,707 relates to a system and method for image processing of tomographic images, determining the image quality by comparing the image quality metric with the pre-determined image quality metric threshold value and performing correction of said images. Therefore, it is desirable to provide systems and methods for image correction.

**SUMMARY**

In a first aspect of the present disclosure, a system for image correction is provided. The system may include at least one storage device including a set of instructions, and at least one processor configured to communicate with the at least one storage device. When executing the set of instructions, the at least one processor may be configured to direct the system to perform the following operations. The operations include obtaining a first image of a target object; determining, using a preset evaluation tool, an image quality evaluation result of the first image; and in response to determining that the image quality evaluation result of the first image does not satisfy a preset condition, correcting the first image using a correction algorithm.

The operations include determining, based on a reference time point, multiple motion vector fields of a target object corresponding to multiple motion time points; for each of the multiple motion time points, determining an image motion deviation corresponding to the motion time point based on a motion vector field corresponding to the motion time point and a reconstructed image corresponding to the motion time point; determining a raw data deviation corresponding to the motion time point based on the image motion deviation corresponding to the motion time point; and generating corrected raw data of the target object by correcting, based on a raw data deviation corresponding to at least one of the multiple motion time points, raw data of the target object that is acquired by imaging the target object.

The operations include obtaining raw data of a target object; determining, based on the raw data of the target object, a target phase; generating a first image corresponding to the target phase; determining, using a preset evaluation tool, an image quality evaluation result of the first image; in response to determining that the image quality evaluation result of the first image does not satisfy a preset condition, generating a set of corrected raw sub-data of the target object corresponding to the target phase by correcting a set of raw sub-data of the target object corresponding to the target phase; and generating, based on the set of corrected raw sub-data of the target object, a corrected image corresponding to the first image.

Additional features will be set forth in part in the description which follows, and in part will become apparent to those skilled in the art upon examination of the following and the accompanying drawings or may be learned by production or operation of the examples.

**BRIEF DESCRIPTION OF THE DRAWINGS**

The present disclosure is further described in terms of exemplary embodiments. These exemplary embodiments are described in detail with reference to the drawings. These embodiments are non-limiting exemplary embodiments, in which like reference numerals represent similar structures throughout the several views of the drawings, and wherein:

FIG. 1 is a schematic diagram illustrating an exemplary image correction system according to some embodiments of the present disclosure;
FIG. 2 is a schematic diagram illustrating hardware and/or software components of an exemplary computing device on which the processing device may be implemented according to some embodiments of the present disclosure;
FIG. 3 is a schematic diagram illustrating hardware and/or software components of an exemplary mobile device according to some embodiments of the present disclosure;

FIG. 4 is a block diagram illustrating an exemplary processing device according to some embodiments of the present disclosure;

FIG. 5 is a flowchart illustrating an exemplary process for image correction according to some embodiments of the present disclosure;

FIG. 6 is a flowchart illustrating an exemplary process for image correction according to some embodiments of the present disclosure;

FIG. 7 is a flowchart illustrating an exemplary process for image correction according to some embodiments of the present disclosure;

FIG. 8 is a flowchart illustrating an exemplary process for determining motion vector fields according to some embodiments of the present disclosure;

FIG. 9 is a flowchart illustrating an exemplary method of raw data correction according to some embodiments of the present disclosure;

FIG. 10 is a schematic diagram illustrating an exemplary process for raw data correction according to some embodiments of the present disclosure;

FIG. 11 is a schematic diagram illustrating an exemplary process for obtaining scanning data at different time points using an imaging device according to some embodiments of the present disclosure; and

FIG. 12 is a schematic diagram illustrating exemplary different displacements of different space points of a target object during an imaging processing according to some embodiments of the present disclosure.

## DETAILED DESCRIPTION

The following description is presented to enable any person skilled in the art to make and use the present disclosure and is provided in the context of a particular application and its requirements.

It will be understood that the term "system," "engine," "unit," "module," and/or "block" used herein are one method to distinguish different components, elements, parts, section or assembly of different level in ascending order. However, the terms may be displaced by another expression if they may achieve the same purpose.

Generally, the word "module," "unit," or "block," as used herein, refers to logic embodied in hardware or firmware, or to a collection of software instructions. A module, a unit, or a block described herein may be implemented as software and/or hardware and may be stored in any type of non-transitory computer-readable medium or another storage device. In some embodiments, a software module/unit/block may be compiled and linked into an executable program. It will be appreciated that software modules can be callable from other modules/units/blocks or from themselves, and/or may be invoked in response to detected events or interrupts. Software modules/units/blocks configured for execution on computing devices may be provided on a computer-readable medium, such as a compact disc, a digital video disc, a flash drive, a magnetic disc, or any other tangible medium, or as a digital download (and can be originally stored in a compressed or installable format that needs installation, decompression, or decryption prior to execution). Such software code may be stored, partially or fully, on a storage device of the executing computing device, for execution by the computing device. Software instructions may be embedded in firmware, such as an Erasable Programmable Read Only Memory (EPROM). It will be further appreciated that hardware modules/units/blocks may be included in connected logic components, such as gates and flip-flops, and/or can be included of programmable units, such as programmable gate arrays or processors. The modules/units/blocks or computing device functionality described herein may be implemented as software modules/units/blocks, but may be represented in hardware or firmware. In general, the modules/units/blocks described herein refer to logical modules/units/blocks that may be combined with other modules/units/blocks or divided into sub-modules/sub-units/sub-blocks despite their physical organization or storage. The description may be applicable to a system, an engine, or a portion thereof.

The terminology used herein is for the purpose of describing particular example embodiments only and is not intended to be limiting. As used herein, the singular forms "a," "an," and "the" may be intended to include the plural forms as well, unless the context clearly indicates otherwise. It will be further understood that the terms "comprise," "comprises," and/or "comprising," "include," "includes," and/or "including," when used in this specification, specify the presence of stated features, integers, steps, operations, elements, and/or components, but do not preclude the presence or addition of one or more other features, integers, steps, operations, elements, components, and/or groups thereof.

It will be understood that when a unit, engine, module, or block is referred to as being "on," "connected to," or "coupled to," another unit, engine, module, or block, it may be directly on, connected or coupled to, or communicate with the other unit, engine, module, or block, or an intervening unit, engine, module, or block may be present, unless the context clearly indicates otherwise. As used herein, the term "and/or" includes any and all combinations of one or more of the associated listed items. For example, the expression "A and/or B" includes only A, only B, or both A and B. The character "/" includes one of the associated listed terms. The term "multiple" or "a/the plurality of" in the present disclosure refers to two or more. The terms "first," "second," and "third," etc., are used to distinguish similar objects and do not represent a specific order of the objects.

These and other features, and characteristics of the present disclosure, as well as the methods of operation and functions of the related elements of structure and the combination of parts and economies of manufacture, may become more apparent upon consideration of the following description with reference to the accompanying drawings, all of which form a part of this disclosure. It is to be expressly understood, however, that the drawings are for the purpose of illustration and description only and are not intended to limit the scope of the present disclosure. It is understood that the drawings are not to scale.

The flowcharts used in the present disclosure illustrate operations that systems implement according to some embodiments in the present disclosure. It is to be expressly understood, the operations of the flowchart may be implemented not in order. Conversely, the operations may be implemented in inverted order, or simultaneously. Moreover, one or more other operations may be added to the flowcharts. One or more operations may be removed from the flowcharts.

In the present disclosure, the subject may include a biological object and/or a non-biological object. The biological object may be a human being, an animal, a plant, or a specific portion, organ, and/or tissue thereof. For example, the subject may include the head, the neck, the thorax, the heart, the stomach, a blood vessel, a soft tissue, a tumor, a nodule, or the like, or any combination thereof. As another example, the subject may include an injured part or one or more pathological tissues of the heart of a patient. In some embodiments, the subject may be a man-made composition of organic and/or inorganic matters that are with or without life. The terms "object" and "subject" are used interchangeably in the present disclosure.

In the present disclosure, the term "image" may refer to a two-dimensional (2D) image, a three-dimensional (3D) image, or a four-dimensional (4D) image (e.g., a time series of 3D images). In some embodiments, the term "image" may refer to an image of a region (e.g., a region of interest (ROI) or a target region) of a subject. In the present disclosure, the terms "corresponding to a time point" and "at a time point" may be used interchangeably.

In some embodiments, when imaging an object using an imaging device, an image acquired by the imaging device may have a poor effect (e.g., a poor image quality) (which may be caused by an uneven sensitivity of magnetic field or coil, an uneven display of contrast agent, a patient positioning, a motion of a target region of the object, etc.) that affects a diagnosis result of the target region of the object. For example, in a coronary CTA diagnosis, since a pulsation of a coronary artery, an image acquired in a coronary CTA imaging may have motion artifact(s), resulting in poor image resolution and heavy artifacts, which in turn leads to difficult diagnosis. In some embodiments, the image may be reconstructed (e.g., corrected) by a correction algorithm to obtain a corrected image. However, before reconstructing the image using the correction algorithm, a user (e.g., an operator such as medical staff or a doctor) may need to check the image quality of the image. If the image quality is poor, the user may manually add a reconstruction sequence and select a corresponding correction algorithm to reconstruct the image. In such cases, a lot of manpower may be consumed, and when a scanning flux is large, the workload of the user may be large, which may lead to misjudgment of the image quality, which in turn affects the diagnosis.

In an aspect of the present disclosure, systems for image correction are provided. The systems obtain raw data of a target object. The systems determine, based on the raw data of the target object, a target phase (e.g., a reference time point). The systems generate a first image corresponding to the target phase. The system determine, using a preset evaluation tool, an image quality evaluation result of the first image. In response to determining that the image quality evaluation result of the first image does not satisfy a preset condition, the systems generate corrected raw sub-data of the target object corresponding to the target phase by correcting raw sub-data of the target object corresponding to the target phase. The systems generate, based on the corrected raw sub-data of the target object, a corrected image corresponding to the first image.

According to some embodiments of the present disclosure, the efficiency of image quality evaluation may be improved by evaluating the image quality of an image (e.g., a medical image) of the target object using a preset evaluation tool. When the image quality of the image does not satisfy a preset condition, a correction algorithm may be automatically performed, which can improve the image quality and reduce human intervention in the screening process. Further, a secondary quality evaluation may be performed on a corrected image. When the image quality of the corrected image does not satisfy a preset condition, the user may be prompted, which can reduce the misjudgment rate and improve the diagnostic efficiency. In some embodiments, different correction algorithms may be selected according to different image quality evaluation results and/or image quality evaluation algorithms to perform image correction on images that do not satisfy the preset condition, which can improve the image correction effect, thereby improving the diagnostic efficiency.

In some embodiments, the correction algorithm may be related to a raw data correction algorithm. The corrected image may be generated based on corrected raw data of the image, which can fundamentally avoid introducing motion artifacts before the reconstruction process while maintaining the self-consistency of the corrected raw data. In some embodiments, a correction value corresponding to the target phase may be determined based on raw data deviations corresponding to motion time points related to the target phase, which can improve the efficiency of obtaining the correction value. By reconstructing the corrected raw data using a reconstruction algorithm, a corrected image with no motion artifact or fewer motion artifacts may be generated, the reconstruction algorithm may not be limited to an iterative reconstruction, and the application scope of the reconstruction algorithm may be expanded.

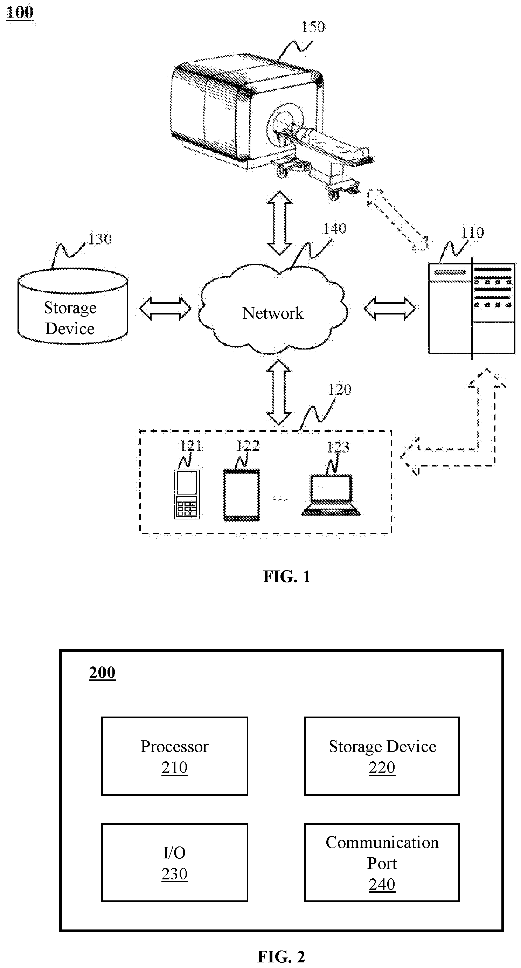

FIG. 1 is a schematic diagram illustrating an exemplary image correction system according to some embodiments of the present disclosure. In some embodiments, the image correction system 100 may be applied to perform an image quality evaluation on an initial image (e.g., an image corresponding to a target phase) of a target object, and correct the initial image (e.g., directly correct the initial image and/or correct raw data of the initial image) based on an image quality evaluation result of the initial image. In some embodiments, the image correction system 100 may include modules and/or components for performing medical imaging and/or related analysis. For example, the image correction system 100 may be a single-modality system or a multi-modality system.

For illustration purposes, as shown in FIG. 1, the image correction system 100 may include a processing device 110, one or more terminal devices 120, a storage device 130, a network 140, and an imaging device 150. The components in the image correction system 100 may be connected in one or more of various ways (e.g., through the network 140 or directly).

The processing device 110 may process data and/or information obtained from the imaging device 150, the terminal device(s) 120, and/or the storage device 130. For example, the processing device 110 may determine whether to perform (or start) a correction algorithm automatically on an image of a target object. As another example, the processing device 110 may correct raw data of the target object. The processing device 110 may determine an image quality evaluation result of the corrected first image. In response to determining that the image quality evaluation result of the corrected first image does not meet the preset condition, the processing device 110 may send a prompt to the terminal device(s) 120 for prompting a user (i.e., send a prompt to a user). In some embodiments, the processing device 110 may be a single server or a server group. The server group may be centralized or distributed. In some embodiments, the processing device 110 may be local or remote. For example, the processing device 110 may access information and/or data stored in the imaging device 150, the terminal device(s) 120, and/or the storage device 130 via the network 140. As another example, the processing device 110 may be directly connected to the imaging device 150, the terminal device(s) 120, and/or the storage device 130 to access stored information and/or data. In some embodiments, the processing device 110 may be implemented on a cloud platform. Merely by way of example, the cloud platform may include a private cloud, a public cloud, a hybrid cloud, a community cloud, a distributed cloud, an inter-cloud, a multi-cloud, or the like, or any combination thereof. In some embodiments, the processing device 110 may be implemented by a computing device 200 having one or more components as illustrated in FIG. 2.

The terminal device(s) 120 may communicate and/or be operably connected with the imaging device 150, the processing device 110, and/or the storage device 130. For example, a user may interact with the imaging device 150 through the terminal device 120 to control one or more components of the imaging device 150. In some embodiments, the terminal device 120 may include a mobile device 121, a tablet computer 122, a laptop computer 123, etc. For example, the mobile device 121 may include a mobile control handle, a personal digital assistant (PDA), a smartphone, or the like, or any combination thereof. In some embodiments, the terminal device 120 may include an input device, an output device, or the like. The input device may be configured with keyboard input, touch screen (e.g., with tactile or tactile feedback) input, voice input, eye tracking input, gesture tracking input, brain monitoring system input, image input, video input, or the like, or any combination thereof. Input information received by the input device may be transmitted via, for example, a bus to the processing device 110 for further processing. The input device may include other types including cursor control devices such as a mouse, a trackball, cursor direction keys, or the like. In some embodiments, an operator (e.g., a medical staff) may input instructions through the input device that reflect a medical image category of the target object. The output device may include a display, a speaker, a printer, or the like, or any combination thereof. In some embodiments, the output device may be used to output a medical image acquired by the imaging device 150 (e.g., the first image of the target object), and/or an image determined by the processing device 110 (e.g., the corrected first image), etc. In some embodiments, the terminal device 120 may be part of the processing device 110.

The storage device 130 may store data, instructions, and/or any other information. In some embodiments, the storage device 130 may store data obtained from the terminal device(s) 120, the imaging device 150, and/or the processing device 110. For example, the storage device 130 may store the first image of the target object that is acquired by the imaging device 150. In some embodiments, the storage device 130 may store data and/or instructions that the processing device 110 may execute or use to perform exemplary methods described in the present disclosure. In some embodiments, the storage device 130 may include a mass storage, removable storage, a volatile read-and-write memory, a read-only memory (ROM), or the like, or any combination thereof. Exemplary mass storage may include a magnetic disk, an optical disk, a solid-state drive, etc. Exemplary removable storage may include a flash drive, a floppy disk, an optical disk, a memory card, a zip disk, a magnetic tape, etc. Exemplary volatile read-and-write memory may include a random access memory (RAM). Exemplary RAM may include a dynamic RAM (DRAM), a double date rate synchronous dynamic RAM (DDR SDRAM), a static RAM (SRAM), a thyristor RAM (T-RAM), and a zero-capacitor RAM (Z-RAM), etc. Exemplary ROM may include a mask ROM (MROM), a programmable ROM (PROM), an erasable programmable ROM (EPROM), an electrically erasable programmable ROM (EEPROM), a compact disk ROM (CD-ROM), and a digital versatile disk ROM, etc. In some embodiments, the storage device 130 may be implemented on a cloud platform. Merely by way of example, the cloud platform may include a private cloud, a public cloud, a hybrid cloud, a community cloud, a distributed cloud, an inter-cloud, a multi-cloud, or the like, or any combination thereof. In some embodiments, historical data with different types may be stored in a cloud platform, such that one or more other components (e.g., the processing device 110 or the terminal device 120) can access or update the data, which ensures real time and cross-platform use of the time. In some embodiments, the storage device 130 may be part of the processing device 110.

The network 140 may include any suitable network that can facilitate the exchange of information and/or data for the image correction system 100. In some embodiments, one or more components of the image correction system 100 (e.g., the imaging device 150, the terminal device(s) 120, the processing device 110, the storage device 130, etc.) may communicate information and/or data with one or more other components of the image correction system 100 via the network 140. The network 140 may include a wired network, a wireless network, or the like, or any combination thereof. Merely by way of example, the network 140 may include a cable network, a wireline network, a fiber-optic network, a telecommunications network, an intranet, a wireless local area network (WLAN), a metropolitan area network (MAN), a public telephone switched network (PSTN), a Bluetooth™ network, a ZigBee™ network, a near field communication (NFC) network, a global system for mobile communications (GSM) network, a code division multiple access (CDMA) network, a time division multiple access (TDMA) network, a general packet radio service (GPRS) network, an enhanced data rate GSM Evolution (EDGE) network, a broadband code division multiple access (WCDMA) network, a high speed downlink packet access (HSDPA) network, a long term evolution (LTE) network, an user datagram protocol (UDP) network, a transmission control protocol/internet protocol (TCP/IP) network, a short message service (SMS) network, a wireless application protocol (WAP) network, an ultra wideband (UWB) network, a mobile communication (e.g., 1G, 2G, 3G, 4G, 5G, etc.) network, a Wi-Fi, a Li-Fi, a narrowband internet of things (NB IOT), or the like, or any combination thereof.

The imaging device 150 may be configured to scan the target object in a detection region of the imaging device 150 and obtain image data (e.g., scan data or raw data) of the target object. In some embodiments, the target object may include a biological object and/or an abiotic object. For example, the target object may include a specific part of the body, such as the head, the chest, the abdomen, a coronary artery, or the like, or any combination thereof. As another example, the target object may be an artificial component of living or inanimate organic and/or inorganic substances. In some embodiments, the image data of the target object may include scanning data (e.g., projection data), one or more images, etc., of the target object. In some embodiments, the terms "scanning data" and "raw data" may be used interchangeably in the present disclosure.

In some embodiments, the imaging device 150 may be a non-invasive biomedical imaging device for disease diagnosis or research purposes. For example, the imaging device 150 may include a single-modality scanner and/or a multi-modality scanner. The single-modality scanner may include an ultrasound scanner, an X-ray scanner, a computed tomography (CT) scanner, a CT angiography (CTA) scanner, a thermal tomography (TTM) scanner, a magnetic resonance imaging (MRI) scanner, an ultrasound checker, a positron emission tomography (PET) scanner, an optical coherence tomography (OCT) scanner, an ultrasound (US) scanner, an intravascular ultrasound (IVUS) scanner, a near infrared spectroscopy (NIRS) scanners, a far infrared (FIR) scanner, or the like, or any combination thereof. A multi-modality scanner may include an X-ray imaging magnetic resonance imaging (X-ray-MRI) scanner, a positron emission tomography X-ray imaging (PET-X-ray) scanner, a single photon emission computed tomography magnetic resonance imaging (SPECT-MRI) scanner, a positron emission tomography computed tomography (PET-CT) scanner, a digital subtraction angiography magnetic resonance imaging (DSA-MRI) scanner, or the like. The scanner provided above is merely for illustration purposes, which is not intended to limit the scope of the present disclosure. As used herein, the term "imaging modality" or "modality" broadly refers to an imaging method or technology that collects, generates, processes, and/or analyzes imaging information of a target object.

In some embodiments, the imaging device 150 may include a gantry, a detector, a detection region, a table, and/or a radiation source. The gantry may be configured to support the detector and the radiation source. The table may be configured to place the target object for scanning/imaging. For example, the user may lie on his/her back, side, or prone on the table. In some embodiments, the table may be a separate device from the imaging device 150. The target object may include a patient, a phantom, or other subject to be scanned. The radiation source may be configured to emit radiation rays to irradiate the target object. The detector may be configured to receive radiation rays passing through the target object. In some embodiments, the imaging device 150 may be or may include an X-ray imaging device, e.g., a DSA (Digital Subtraction Angiography) device, a Digital Radiography (DR) device, a Computed Radiography Equipment (Computed Radiography, CR) device, a Digital Fluorography (DF) device, a CT Scanner, an MR Scanner, a mammography device, a C-arm device, etc.

In some embodiments, the imaging device 150 may also include a display screen. The display screen may be used to observe data information of the imaging device 150 and/or the target object scanned by the imaging device 150. For example, the medical staff may observe lesion information of the chest cavity, a bone, a breast, or other detection sites of the target object (e.g., a patient) through the display screen. In some embodiments, the display screen may include a liquid crystal display (LCD), a light emitting diode (LED) - based display, a flat back panel display, a curved screen, a television device, a cathode ray tube (CRT), a touch screen, or the like, or any combination thereof. In some embodiments, the display screen may also include an output device (such as a speaker or a printer) and/or an input device (such as a keyboard or a mice).

In some embodiments, the image data acquired by the imaging device 150 (e.g., the first image of the target object) may be transmitted to the processing device 110 for further analysis. Additionally or alternatively, the image data acquired by the imaging device 150 may be transmitted to the terminal device (e.g., the terminal device 120) for display and/or the storage device (e.g., the storage device 130) for storage.

It should be noted that the above description is merely provided for the purposes of illustration, and not intended to limit the scope of the present disclosure. For persons having ordinary skills in the art, multiple variations and modifications may be made under the teachings of the present disclosure. The features, structures, methods, and other features of the exemplary embodiments described in the present disclosure may be combined in various ways to obtain additional and/or alternative exemplary embodiments. However, those variations and modifications do not depart from the scope of the present disclosure. In some embodiments, the imaging device 150 may include modules and/or components for performing imaging and/or correlation analysis. For example, the imaging device 150 may include a processor (such as the processing device 110). In some embodiments, the storage device 130 may be a data storage device including a cloud computing platform (e.g., a public cloud, a private cloud, a community, a hybrid cloud, etc.).

FIG. 2 is a schematic diagram illustrating exemplary hardware and/or software components of an exemplary computing device according to some embodiments of the present disclosure. The computing device 200 may be configured to implement any component of the image correction system. For example, the imaging device 150, the terminal device 120, the processing device 110, and/or the storage device 130 may be implemented on the computing device 200. Although only one such computing device is shown for convenience, the computer functions relating to the image correction system as described herein may be implemented in a distributed fashion on a number of similar platforms, to distribute the processing load. As illustrated in FIG. 2, the computing device 200 may include a processor 210, a storage device 220, an input/output (I/O) 230, and a communication port 240.

The processor 210 may execute computer instructions (e.g., program codes) and perform functions of the processing device 110 in accordance with techniques described herein. The computer instructions may include, for example, routines, programs, objects, components, signals, data structures, procedures, modules, and functions, which perform particular functions described herein. In some embodiments, the processor 210 may perform instructions obtained from the terminal device 120 and/or the storage device 130. In some embodiments, the processor 210 may include one or more hardware processors, such as a microcontroller, a microprocessor, a reduced instruction set computer (RISC), an application-specific integrated circuits (ASICs), an application-specific instruction-set processor (ASIP), a central processing unit (CPU), a graphics processing unit (GPU), a physics processing unit (PPU), a microcontroller unit, a digital signal processor (DSP), a field-programmable gate array (FPGA), an advanced RISC machine (ARM), a programmable logic device (PLD), any circuit or processor capable of executing one or more functions, or the like, or any combinations thereof.

Merely for illustration, only one processor is described in the computing device 200. However, it should be noted that the computing device 200 in the present disclosure may also include multiple processors. Thus operations and/or method steps that are performed by one processor as described in the present disclosure may also be jointly or separately performed by the multiple processors. For example, if in the present disclosure the processor of the computing device 200 executes both operation A and operation B, it should be understood that operation A and operation B may also be performed by two or more different processors jointly or separately in the computing device 200 (e.g., a first processor executes operation A and a second processor executes operation B, or the first and second processors jointly execute operations A and B).

The storage device 220 may store data/information obtained from the imaging device 150, the terminal device 120, the storage device 130, or any other component of the image correction system 100. In some embodiments, the storage device 220 may include a mass storage device, a removable storage device, a volatile read-and-write memory, a read-only memory (ROM), or the like, or any combination thereof. For example, the mass storage device may include a magnetic disk, an optical disk, a solid-state drive, a mobile storage device, etc. The removable storage device may include a flash drive, a floppy disk, an optical disk, a memory card, a ZIP disk, a magnetic tape, etc. The volatile read-and-write memory may include a random access memory (RAM). The RAM may include a dynamic RAM (DRAM), a double date rate synchronous dynamic RAM (DDR-SDRAM), a static RAM (SRAM), a thyristor RAM (T-RAM), and a zero-capacitor RAM (Z-RAM), etc. The ROM may include a mask ROM (MROM), a programmable ROM (PROM), an erasable programmable ROM (EPROM), an electrically erasable programmable ROM (EEPROM), a compact disk ROM (CD-ROM), a digital versatile disk ROM, etc. In some embodiments, the storage device 220 may store one or more programs and/or instructions to perform exemplary methods described in the present disclosure.

The I/O 230 may input or output signals, data, and/or information. In some embodiments, the I/O 230 may enable user interaction with the processing device 110. In some embodiments, the I/O 230 may include an input device and an output device. Exemplary input devices may include a keyboard, a mouse, a touch screen, a microphone, a camera capturing gestures, or the like, or a combination thereof. Exemplary output devices may include a display device, a loudspeaker, a printer, a projector, a 3D hologram, a light, a warning light, or the like, or a combination thereof. Exemplary display devices may include a liquid crystal display (LCD), a light-emitting diode (LED)-based display, a flat panel display, a curved screen, a television device, a cathode ray tube (CRT), or the like, or a combination thereof.

The communication port 240 may be connected with a network (e.g., the network 140) to facilitate data communications. The communication port 240 may establish connections between the processing device 110 and the imaging device 150, the terminal device 120, the storage device 130, or any external devices (e.g., an external storage device, or an image/data processing workstation). The connection may be a wired connection, a wireless connection, or a combination of both that enables data transmission and reception. The wired connection may include an electrical cable, an optical cable, a telephone wire, or the like, or any combination thereof. In some embodiments, the communication port 240 may be a standardized communication port, such as RS232, RS485, etc. In some embodiments, the communication port 240 may be a specially designed communication port. For example, the communication port 240 may be designed in accordance with the digital imaging and communications in medicine (DICOM) protocol.

In some embodiments, the computing device 200 may further include a bus (not shown) configured to achieve the communication between the processor 210, the storage device 220, the I/O 230, and/or the communication port 240. The bus may include hardware, software, or both, which decouple the components of the computing device 200 to each other. The bus may include at least one of a data bus, an address bus, a control bus, an expansion bus, or a local bus. For example, the bus may include an accelerated graphics port (AGP) or other graphics bus, an extended industry standard architecture (EISA) bus, a front side bus (FSB), a hyper transport (HT) interconnection, an industry standard architecture (ISA) bus, a front side bus (FSB), an Infiniband interconnection, a low pin count (LPC) bus, a storage bus, a micro channel architecture (MCA) bus, a peripheral component interconnect (PCI) bus, a PCI-Express (PCI-X) bus, a serial advanced technology attachment (SATA) bus, a video electronics standards association local bus (VLB) bus, or the like, or any combination thereof. In some embodiments, the bus may include one or more buses. Although specific buses are described, the present disclosure may consider any suitable bus or interconnection.

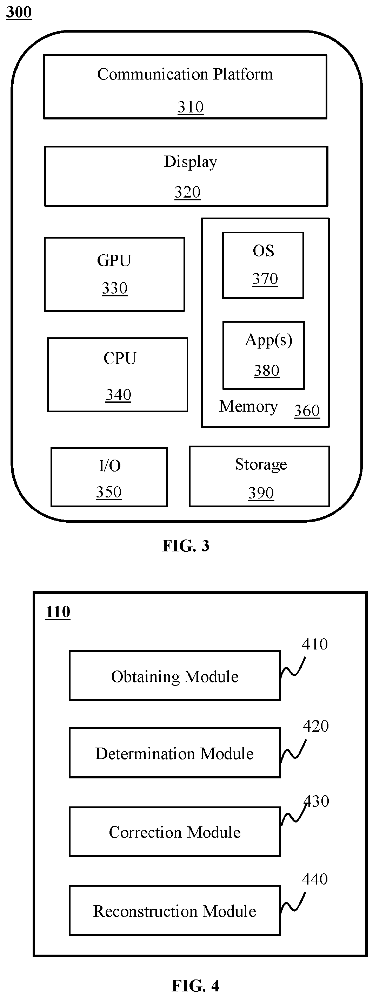

FIG. 3 is a schematic diagram illustrating exemplary hardware and/or software components of an exemplary mobile device on which the terminal device 120 may be implemented according to some embodiments of the present disclosure. As illustrated in FIG. 3, the mobile device 300 may include a communication unit 310, a display 320, a graphics processing unit (GPU) 330, a central processing unit (CPU) 340, an I/O 350, a memory 360, and a storage 390. In some embodiments, any other suitable component, including but not limited to a system bus or a controller (not shown), may also be included in the mobile device 300. In some embodiments, a mobile operating system (OS) 370 (e.g., iOS™, Android™, Windows Phone™, etc.) and one or more applications (App(s)) 380 may be loaded into the memory 360 from the storage 390 in order to be executed by the CPU 340. The applications 380 may include a browser or any other suitable mobile apps for receiving and rendering information relating to image processing or other information from the processing device 110. User interactions with the information stream may be achieved via the I/O 350 and provided to the processing device 110 and/or other components of the image correction system 100 via the network 140. In some embodiments, a user may input parameters to the image correction system 100, via the mobile device 300.

In order to implement various modules, units and their functions described above, a computer hardware platform may be used as hardware platforms of one or more elements (e.g., the processing device 110 and/or other components of the image correction system 100 described in FIG. 1). Since these hardware elements, operating systems and program languages are common; it may be assumed that persons skilled in the art may be familiar with these techniques and they may be able to provide information needed in the image processing operations according to the techniques described in the present disclosure. A computer with the user interface may be used as a personal computer (PC), or other types of workstations or terminal devices. After being properly programmed, a computer with the user interface may be used as a server. It may be considered that those skilled in the art may also be familiar with such structures, programs, or general operations of this type of computing device.

FIG. 4 is a block diagram illustrating an exemplary processing device according to some embodiments of the present disclosure. As shown in FIG. 4, the processing device 110 may include an obtaining module 410, a determination module 420, a correction module 430, and a reconstruction module 440.

The obtaining module 410 may be configured to obtain information and/or data from one or more components of the image correction system 100. In some embodiments, the obtaining module 410 may obtain image data of a target object from the imaging device 140, a storage device (e.g. the storage device 130, the storage device 220, or the storage 390), etc. For example, the obtaining module 410 may obtain raw data (or a set of raw sub-data) of the target object. As another example, the obtaining module 410 may obtain an image (e.g., a first image, a reference image, etc.) of the target object. More descriptions regarding the obtaining of the image data of the target object may be found elsewhere in the present disclosure (e.g., operations 510, 610, 810, and the relevant descriptions thereof).

The determination module 420 may be configured to perform determination-related operations. In some embodiments, the determination module 420 may determine whether an image needs a correction. For example, the determination module 420 may determine a target phase based on the raw data of the object. The determination module 420 may determine an image quality evaluation result of an image corresponding to the target phase using a preset algorithm. The determination module 420 may determine whether the image quality evaluation result satisfies a preset condition. In some embodiments, the determination module 420 may determine one or more raw data deviations. For example, the determination module 420 may determine multiple motion vector fields of a target object corresponding to multiple motion time points (e.g., multiple sub-phases of the target phase) based on a reference time point (e.g., a reference sub-phase related to the target phase). For each of the multiple motion time points, the determination module 420 may determine an image motion deviation corresponding to the motion time point based on a motion vector field corresponding to the motion time point and a reconstructed image corresponding to the motion time point; and determine a raw data deviation corresponding to the motion time point based on the image motion deviation corresponding to the motion time point. In some embodiments, the determination module 420 may include one or more units to perform functions of the determination modules separately. For example, the determination module 420 may include a quality evaluation unit, a motion vector field determination unit, an image motion deviation determination unit, a raw data deviation determination unit, or the like, or any combination thereof. More descriptions regarding the determination of whether an image needs a correction and/or one or more raw data deviations may be found elsewhere in the present disclosure (e.g., operations 504, 508, 510, 620, 630, 650, 660, 710-730, 810-830 and the relevant descriptions thereof).

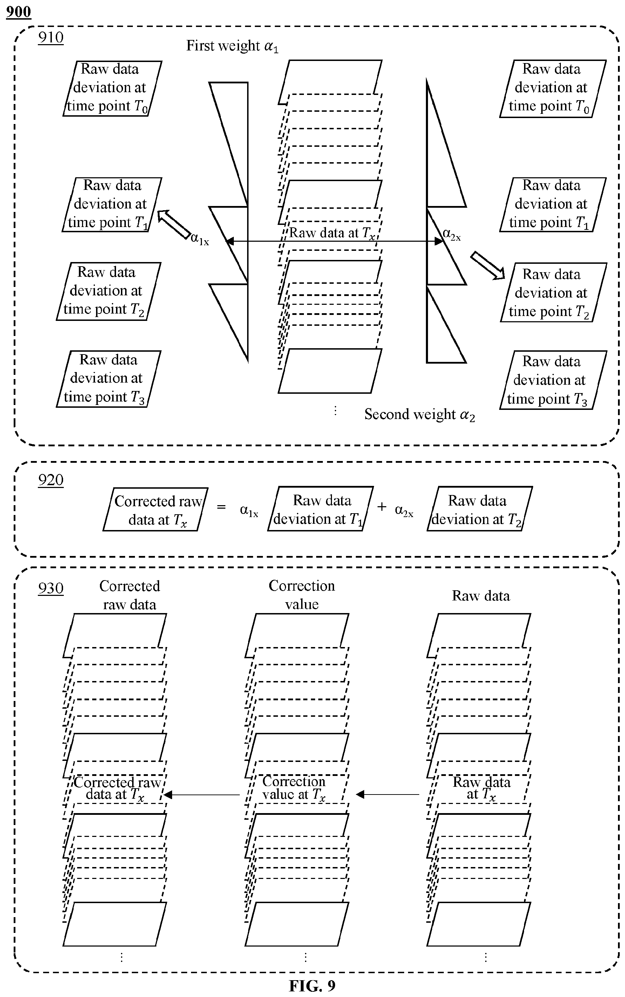

The correction module 430 may be configured to perform image correction operations. For example, the correction module 430 may generate a corrected image by correcting an image using an image correction algorithm. As another example, the correction module 430 may generate corrected raw data (e.g., a set of corrected raw sub-data) corresponding to a motion time point by correcting, based on a raw data deviation corresponding to the motion time point, a set of raw sub-data at the motion time point. More descriptions regarding the image correction operations may be found elsewhere in the present disclosure (e.g., operations 512, 640, and 740, FIG. 9 and the relevant descriptions thereof).

The reconstruction module 440 may be configured to perform image reconstruction operations. For example, the reconstruction module 440 may generate an image (e.g., the first image, the reference image, etc.) based on raw data of the image using a reconstruction algorithm. More descriptions regarding the image reconstruction and/or reconstruction algorithms may be found elsewhere in the present disclosure (e.g., operations 504, 506, 514, 750, 810, 820, and the relevant descriptions thereof).

It should be noted that the processing device 110 shown in FIG. 4 may be implemented in various ways. For example, the processing device 110 and the modules thereof may be implemented by hardware, software, or a combination thereof. A hardware part may be realized by special logic; a software part may be stored in memory and executed by an appropriate instruction execution system, such as a microprocessor or special design hardware. Those skilled in the art may understand that the above modules may be implemented using computer-executable instructions and/or contained in processor control code, such as providing such code on a carrier medium such as magnetic disk, CD or DVD-ROM, a programmable memory such as read-only memory (Firmware), or a data carrier such as an optical or electronic signal carrier. The modules of the processing device 110 may be realized by hardware circuits such as a VLSI, a gate array, semiconductors such as a logic chip and a transistor, or programmable hardware devices such as a field-programmable gate array and a programmable logic device, by software executed by various types of processors, and further by a combination of the above hardware circuit and software (e.g., a firmware).

The modules in the processing device 110 may be connected to or communicate with each other via a wired connection or a wireless connection. The wired connection may include a metal cable, an optical cable, a hybrid cable, or the like, or any combination thereof. The wireless connection may include a Local Area Network (LAN), a Wide Area Network (WAN), a Bluetooth™, a ZigBee™, a Near Field Communication (NFC), or the like, or any combination thereof. In some embodiments, the processing device 110 may include one or more additional modules. For example, the processing device 110 may include a storage module (not shown) used to store information and/or data. In some embodiments, two or more of the modules may be combined into a single module, and any one of the modules may be divided into two or more units. In some embodiments, the obtaining module 410, the determination module 420, the correction module 430, and the reconstruction module 440 may be different modules in the same processing device or different processing devices. In some embodiments, two or more of the obtaining module 410, the determination module 420, the correction module 430, and the reconstruction module 440 may be integrated into a single module to include functions of the two or more modules. In some embodiments, the obtaining module 410, the determination module 420, the correction module 430, and the reconstruction module 440 may share one storage module, or each module may also have its storage module.

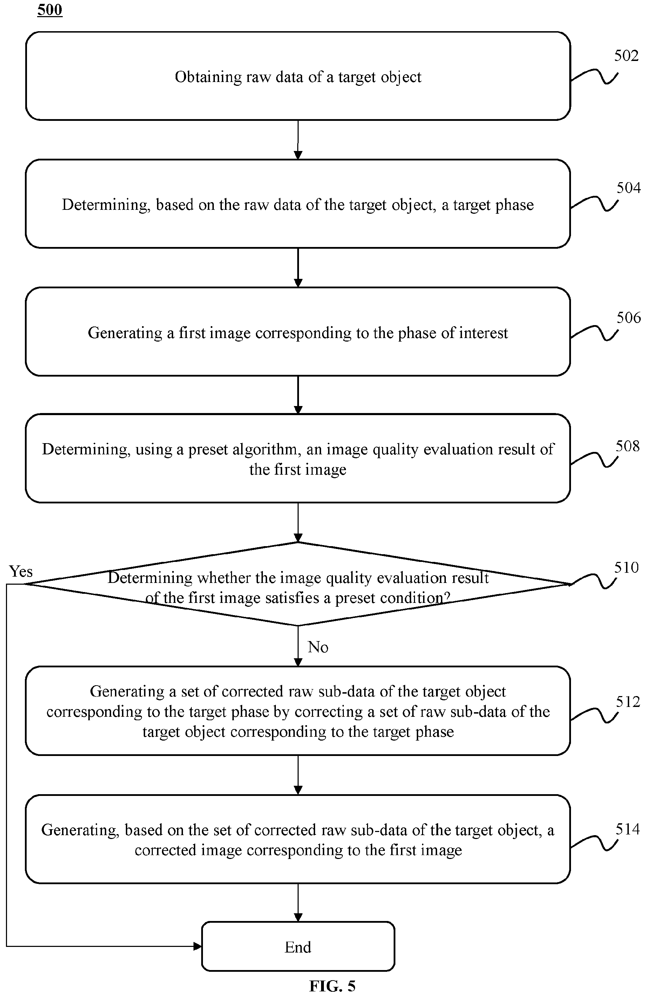

FIG. 5 is a flowchart illustrating an exemplary process for image correction according to some embodiments of the present disclosure. In some embodiments, one or more operations of process 500 illustrated in FIG. 5 may be implemented in the image correction system 100 illustrated in FIG. 1. For example, process 500 illustrated in FIG. 5 may be stored in the storage device 130 in the form of instructions, and invoked and/or executed by the processing device 110.

In 502, the processing device 110 (e.g., the obtaining module 410) may obtain raw data of a target object.

As used herein, the raw data of the target object may refer to scanning data (e.g., projection data) of the target object acquired by an imaging process using an imaging device (e.g., the imaging device 150). The target object may include a subject (e.g., a patient) or a part thereof. For example, the target object may include the heart, the brain, the neck, the heart, a lung, etc. of a patient. In some embodiments, the target object may undergo a cycle motion (e.g., a cardiac motion, a respiratory motion, etc.) during the imaging process, which may introduce motion artifacts in the raw data of the target object.

In some embodiments, the raw data of the target object may include raw data acquired at multiple phases during the imaging process of the target object. For example, the raw data of the target object may include multiple sets of raw sub-data of the target object. Each of the multiple sets of raw sub-data may be acquired at one of the multiple phases during the imaging process of the target object. As used herein, a phase may be a specific time period during the imaging process of the target object. For illustration purposes, the target object may include the heart of a patient and the imaging process may include a CT angiography (CTA) process.

In some embodiments, the processing device 110 may obtain the raw data of the target object from one or more components of the image correction system100. For example, the processing device 110 may obtain the raw data of the target object from the imaging device 150. As another example, the processing device 110 may obtain the raw data of the target object from a storage device (e.g., the storage device 130, the storage 220, or the storage 390).

In 504, the processing device 110 (e.g., the determination module 420 or the reconstruction module 440) may determine, based on the raw data of the target object, a target phase.

As used herein, the target phase may refer to an optimal phase at which the target object undergoes no motion or undergoes a motion with a minimal motion amplitude during the imaging process.

In some embodiments, the processing device 110 may generate, based on the raw data of the target object, multiple images corresponding to the multiple phases. Each of the multiple images may correspond to one of the multiple phases. For example, the processing device 110 may generate an image of the multiple images based on a set of raw sub-data acquired at a phase corresponding to the image. As another example, the processing device 110 may generate the multiple images using a reconstruction algorithm (e.g., a reconstruction algorithm as described in operation 810 and the relevant description thereof).

In some embodiments, the processing device 110 may determine, based on the multiple images and/or a global criterion, one or more candidate phases from the multiple phases. The candidate phases may be phases at which the target object may undergo a stable motion with a motion amplitude lower than other phases (or lower than a threshold). The global criteria may be related to an image similarity. For example, for any two phases (e.g., two adjacent phases) of the multiple phases, the processing device 110 may determine a mean absolute difference (MAD) value between two images corresponding to the two phases using a MAD algorithm. The MAD value between the two images may also be referred to as a MAD corresponding to the two phases. The MAD value may indicate pixel differences between the two images. The less the MAD value between the two images is, the higher the similarity between the two images may be. The processing device 110 may select the candidate phases from the multiple phases based on MAD values between the multiple phases. MAD values between candidate phases may be less than MAD values between other phases of the multiple phases. It should be noted that the candidate phases may be determined using any other algorithm. For instance, for coronary artery imaging, the global criteria may be related to a circularity of the coronary artery in an image, an image gradient of the image, etc. The processing device 120 may select the candidate phases from the multiple phases based on circularities and/or image gradients of multiple images corresponding to the multiple phases. The closer a circularity of the coronary artery in an image corresponding to a phase is to 1, the more likely the phase may be selected as a candidate phase. The greater an image gradient of an image corresponding to a phase is, the more likely the phase may be selected as a candidate phase.

In some embodiments, the processing device 110 may determine a quality assessment (e.g., a quality score or a quality grade) of a target region in each of images corresponding to the candidate phases. A quality assessment of the target region in an image corresponding to a candidate phase may also be referred to as a quality assessment corresponding to the candidate phase. The target region may be a region of interest (ROI) in each of the images. For the target object being the heart, the target region may include coronary arteries of the heart, e.g., a left coronary artery and/or a right coronary artery. For example, the processing device 110 may determine the target region (e.g., the left coronary artery and/or the right coronary artery) in each of the images using an image segmentation algorithm (e.g., an image segmentation algorithm as described in operation 620 and the relevant description thereof). The processing device 110 may determine a quality assessment of a coronary artery (e.g., the right coronary artery) of the heart in each of the images corresponding to the candidate phases. Alternatively, the processing device 110 may determine a quality assessment of both the left and right coronary arteries of the target in each of the images corresponding to the candidate phases. In some embodiments, the processing device 110 may determine the quality assessment of the target region in each of the images corresponding to the candidate phases using an assessment algorithm. The assessment algorithm may be the same as or similar to a preset evaluation tool for determining an image quality evaluation result as described in operations 508 and 620. More descriptions regarding the determining the quality assessment may be found elsewhere in the present disclosure (e.g., operation 620 and the relevant description thereof).

Further, the processing device 110 may determine, based on the quality assessments corresponding to the candidate phases, the target phase from the candidate phases. For example, the processing device 110 may determine a phase of the candidate phases that corresponds to the highest quality assessment (e.g., the highest quality score or the highest quality grade) as the target phase.

In 506, the processing device 110 (e.g., the reconstruction module 440) may generate a first image corresponding to the target phase.

In some embodiments, the processing device 110 may obtain a set of raw sub-data of the target object corresponding to the target phase. The processing device 110 may generate the first image based on the set of raw sub-data of the target object using a reconstruction algorithm (e.g., the reconstruction algorithm as described in operation 810 and the relevant description thereof).

In 508, the processing device 110 (e.g., the determination module 420) may determine, using a preset evaluation tool, an image quality evaluation result of the first image.

In some embodiments, the processing device 110 may determine, based on the first image (e.g., using an image segmentation algorithm), a second image of a target region of the target object. The target region of the target object may be the same as or similar to the target region as described in operation 504. For the target object being the heart, the target region may include the left coronary artery and/or the right coronary artery of the heart. The processing device 110 may determine, based on the second image using the preset evaluation tool, the image quality evaluation result of the first image. The preset evaluation tool may include a preset algorithm, a preset model, or the like, or any combination thereof. In some embodiments, the evaluation tool may be achieved as software (e.g., an application). More descriptions regarding the determination of the image quality evaluation result of the first image may be found elsewhere in the present disclosure (e.g., operation 620 and the relevant description thereof). Alternatively, the target region may be a region including artifacts (also referred to as an artifact region). The second image of the target region may be an image of the artifact region.

In 510, the processing device 110 (e.g., the determination module 420) may determine whether the image quality evaluation result of the first image satisfies a preset condition.

The preset condition may be the same as or similar to a preset condition as described in operation 630, which is not repeated herein. In response to determining that the image quality evaluation result of the first image satisfies the preset condition, the process 500 may end and the processing device 110 may determine the first image as a final image corresponding to the target phase. In response to determining that the image quality evaluation result of the first image does not satisfy the preset condition, the process 500 may proceed to operation 512.

In 512, the processing device 110 (e.g., the correction module 430) may generate a set of corrected raw sub-data of the target object corresponding to the target phase by correcting a set of raw sub-data of the target object corresponding to the target phase (i.e., the set of raw sub-data of the target object acquired at the target phase).

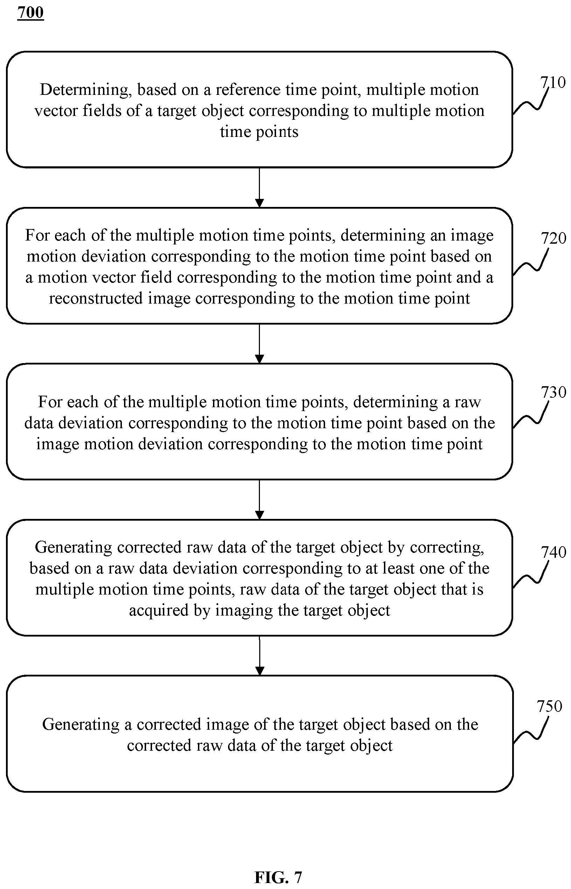

In some embodiments, the processing device 110 may determine at least two phases related to the target phase (e.g., a first sub-phase related to the target phase and a second sub-phase related to the target phase). The first sub-phase and the second sub-phase may be sub-phases related to the target phase. The first sub-phase or the second sub-phase may correspond to a time point in the target phase. That is, in some embodiments of the present disclosure, the terms "sub-phase" and "time point" may be used interchangeably. In some embodiments, the first sub-phase may be earlier (or smaller) than (or previous to) the second sub-phase. The processing device 110 may obtain/determine a first raw data deviation corresponding to the first sub-phase related to the target phase. The processing device 110 may obtain/determine a second raw data deviation corresponding to the second sub-phase related to the target phase. For example, the processing device 110 may obtain/determine a first image motion deviation corresponding to the first sub-phase, which is similar to that described in operation 720 in FIG. 7. The processing device 110 may determine, based on the first image motion deviation, the first raw data deviation corresponding to the first sub-phase, which is similar to that described in operation 730 in FIG. 7. Similarly, the processing device 110 may obtain/determine a second image motion deviation corresponding to the second sub-phase. The processing device 110 may determine, based on the second image motion deviation, the second raw data deviation corresponding to the second sub-phase.

Further, the processing device 110 may generate the set of corrected raw sub-data of the target object corresponding to the target phase by correcting, based on the first raw data deviation and the second raw deviation, the set of raw sub-data of the target object corresponding to the target phase. For example, the processing device 110 may determine a first weight and a second weight based on the target phase, the first sub-phase, and the second sub-phase. The processing device 110 may determine a correction value corresponding to the target phase based on the first weight, the second weight, the first raw data deviation, and the second raw deviation. The processing device 110 may generate the set of corrected raw sub-data corresponding to the target phase by correcting, based on the correction value, the set of raw sub-data corresponding to the target phase. More descriptions regarding the raw data correction may be found elsewhere in the present disclosure (e.g., FIGs. 7-10 and the relevant descriptions thereof).

In 514, the processing device 110 (e.g., the reconstruction module 440) may generate, based on the set of corrected raw sub-data of the target object, a corrected image corresponding to the first image.

In some embodiments, the processing device 110 may generate the corrected image corresponding to the first image based on the set of corrected raw sub-data of the target object using a reconstruction algorithm as described elsewhere in the present disclosure.

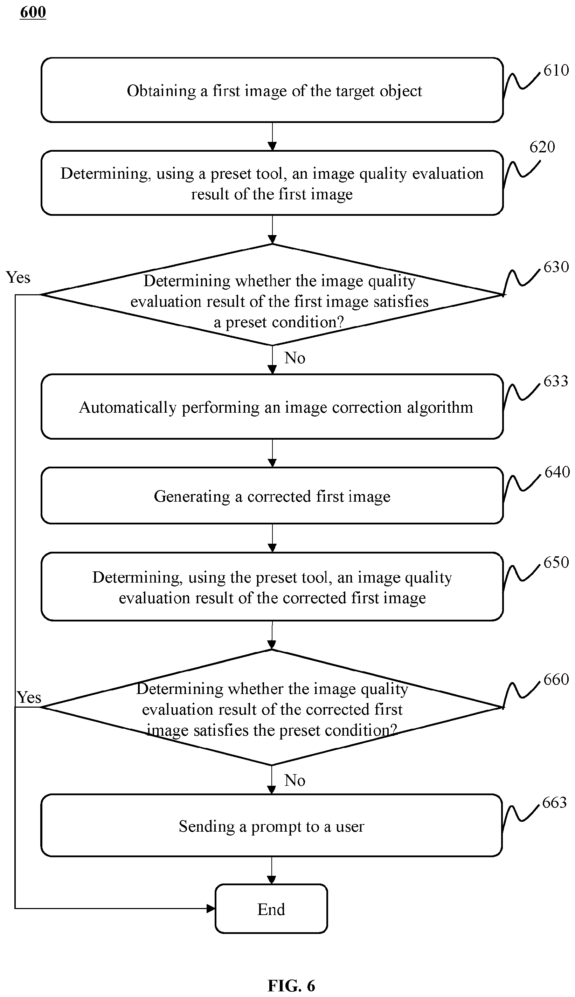

In some embodiments, one or more operations may be added or omitted in the process 500. For example, an additional operation may be added after operation 514 to further evaluate the image quality of the corrected image, which is similar to operation 660 in FIG. 6. In some embodiments, two or more operations may be combined in a single operation.

FIG. 6 is a flowchart illustrating an exemplary process for image correction according to some embodiments of the present disclosure. In some embodiments, one or more operations of process 600 illustrated in FIG. 6 may be implemented in the image correction system 100 illustrated in FIG. 1. For example, process 600 illustrated in FIG. 6 may be stored in the storage device 130 in the form of instructions, and invoked and/or executed by the processing device 110.

In 610, a first image of a target object may be obtained. In some embodiments, operation 610 may be performed by the processing device 110 (e.g., the obtaining module 410). In some embodiments, operation 610 may be achieved by operations 502-506 in FIG.5.

For example, the target object may be any subject that needs to be imaged, such as a patient or a part of the body of the patient. In some embodiments, the first image may reflect projection data of the target object that is scanned and acquired by the imaging device. In some embodiments, the first image may be an original image of the target object. For example, the first image may be the original scanning data acquired by the imaging device 150. In some embodiments, the first image may be an image reconstructed based on the original scanning data. For example, the first image may be an FBP (filtered back projection) image obtained by the imaging device 150 based on the original scanning data of the target object. In some embodiments, the first image may be an image determined by a preset evaluation tool. For example, the first image may correspond to a target phase (e.g., an optimal phase) that is selected from multiple FBP images of the target object by a built-in algorithm of the imaging device 150. More descriptions regarding the target phase may be found elsewhere in the present disclosure (e.g., operation 504 and the description thereof).

In some embodiments, the first image may be an image with artifact(s). The artifacts may refer to various forms of image defects that do not exist in the target object but appear on the image of the target. In some embodiments, the shape of the artifacts may include a triangle, an arc, a trailing tail, or the like, or any combination thereof. In some embodiments, the artifacts may be caused by physiological activities of the target object (e.g., a movement/motion, a breathing, a heartbeat, a pulse, intestinal peristalsis, etc.), a metal foreign body in and/or outside the target object, a sampling aliasing during imaging, a radiation hardening, a noise, etc. When the target object is scanned, the artifact(s) caused by autonomous motion (such as a limb motion, swallowing, etc.) or involuntary motion (such as a heartbeat, a blood vessel pulsation, etc.) of the target object may also be referred to as motion artifact(s).

In some embodiments, the processing device 110 may obtain the first image of the target object from the imaging device (e.g., the imaging device 150). In some embodiments, the processing device 110 may obtain the first image of the target object from a storage device (e.g., the storage device 130). In some embodiments, the processing device 110 may obtain the first image of the target object from other data sources and in any reasonable way, which is not limited in the present disclosure. In some embodiments, the processing device 110 may obtain raw data corresponding to the first image from the imaging device 150 or the storage device 130 of the image correction system 110. The processing device 110 may generate the first image based on the raw data corresponding to the first image using a reconstruction algorithm.

In 620, an image quality evaluation result of the first image may be determined using a preset evaluation tool (e.g., a preset algorithm or a preset model). In some embodiments, operation 620 may be performed by the processing device 110 (e.g., the determination module 420, or a quality evaluation unit of the determination module 420).

The image quality evaluation result may reflect the accuracy of information presentation of an image of the target object. For example, an image quality evaluation result of an image of a coronary artery may reflect the accuracy of the shape and size of the coronary artery presented in the image of the coronary artery. In some embodiments, the image quality evaluation result may include an image quality score or an image quality grade. Generally, the higher the image quality score or the image quality grade is, the higher the accuracy of information presented in the image may be. Generally, the smaller a value corresponding to the image quality grade is, the higher a level corresponding to the image quality grade may be. For example, a first level may be higher than a second level. In some alternative embodiments, the smaller the value corresponding to the quality grade of the image is, the lower the level corresponding to the quality grade may be, which is not limited in the present disclosure.

In some embodiments, the processing device 110 may determine a second image of a target region of the target object based on the first image of the target object. The processing device 110 may determine the image quality evaluation result of the first image of the target object based on the second image of the target region using the preset evaluation tool. The second image of the target region may refer to an image that includes a region of the target object that a user (e.g., a medical staff) is interested in. In some embodiments, the second image of the target region may be a portion of the first image that only includes the target object. For example, when the first image is an image of the heart and the target region includes a coronary artery of the heart, the second image of the target region may be an image including the coronary artery. In some embodiments, the processing device 110 may determine the second image of the target region of the target object by an image segmentation algorithm. For example, the image segmentation algorithm may include a threshold-based segmentation algorithm, a region-based segmentation algorithm, an edge-based segmentation algorithm, a specific theory-based segmentation algorithm, a histogram-based segmentation algorithm, a gene coding-based segmentation algorithm, or the like, or any combination thereof. In some embodiments, the processing device 110 may determine the second image of the target region of the target object by other feasible manners, such as a trained neural network model, which is not limited in the present disclosure.

In some embodiments, the processing device 110 may determine an image quality evaluation result of the second image of the target region as the image quality evaluation result of the first image using the preset evaluation tool. In some embodiments, the preset evaluation tool (e.g., a preset algorithm or a preset model) may be related to one or more evaluation indicators of the target object, an evaluation standard, a weight of each of the evaluation indicator(s), etc. For example, the processing device 110 may determine the image quality score or the image quality grade of the second image using the preset evaluation tool according to evaluation indicators such as the shape, an area, a centerline, a diameter, an edge thickness, etc., of the target object in the second image and a weight corresponding to each of the evaluation indicators. As another example, the processing device 110 may determine the image quality score or the image quality grade of the second image using the preset evaluation tool according to evaluations indicators such as a contrast, a gray, a CT value, etc., of a pixel of the target object in the second image.

Merely by way of example, when the target object is the coronary arteries (e.g., a left coronary artery and/or a right coronary artery) of a patient, the processing device 110 may obtain a first image including one or more of the coronary arteries from the imaging device 150. The processing device 110 may determine a region corresponding to each of the coronary arteries in the first image using the image segmentation algorithm based on the first image, and segment the region corresponding to each of the coronary arteries separately to determine a second image of a target region of each of the coronary arteries. That is, there may be one or more second images. For example, there may be a single second image of both the left coronary artery and the right coronary artery. As another example, there may be two second images corresponding to the left coronary artery and the right coronary artery respectively. The processing device 110 may determine the image quality evaluation result of the first image based on a comprehensive image quality evaluation result of a morphological fit degree and an enhancement degree of each of the coronary arteries in the second image(s). Merely by way of example, the processing device 110 may determine whether an image quality evaluation result of each of the second image(s) satisfies a preset condition. In response to determining that an image quality evaluation result of any one of the second image(s) does not satisfy the preset condition, the processing device 110 may determine that the first image needs to be corrected.

In some embodiments, a morphology of a coronary artery may include a shape, a contour, a diameter, a thickness, or the like, or any combination thereof, of the coronary artery. In some embodiments, the processing device 110 may determine a morphology score or grade based on a similarity (or a fit degree) (also referred to as a morphology similarity or a morphology fit degree) between morphology of the coronary artery in the second image of the target region and a standard morphology of the coronary artery. For example, if the morphology similarity (or the morphology fit degree) is more than 95%, the processing device 110 may determine the morphology score as 5 points or determine the morphology grade as a first grade; if the morphology similarity (or the morphology fit degree) is 90%~95%, the processing device 110 may determine the morphology score as 4 points or determine the morphology grade as a second grade; if the morphology similarity (or the morphology fit degree) is 85%~90%, the processing device 110 may determine the morphology score as 3 points or determine the morphology grade as a third grade; if the morphological similarity (or the morphology fit degree) is 50%~85%, the processing device 110 may determine the morphology score as 2 points or determine the morphology grade as a fourth grade; if the morphological similarity (or the morphology fit degree) is less than 50%, the processing device 110 may determine the morphology score as 1 point or determine the morphology grade as a fifth grade. It should be noted that the morphology score or grade may include any scales, which are not limited herein.

An enhancement degree of a coronary artery may refer to a CT value of a region corresponding to the coronary artery in the second image. The CT value may relate to human tissue density and be generally expressed in HU. In some embodiments, the enhancement degree of a coronary artery may be represented by an enhancement score or grade of the coronary artery. In some embodiments, the processing device 110 may determine an enhancement score or grade based on a mean CT value of the coronary artery in the second image of the target region. For example, if the mean CT value of the coronary artery in the second image of the target region is greater than 450 HU, the processing device 110 may determine the enhancement score as 5 points or determine the enhancement grade as a first grade; if the mean CT value of the coronary artery in the second image of the target region is 400 HU - 450 HU, the processing device 110 may determine the enhancement score as 4 points or determine the enhancement grade as a second grade; if the mean CT value of the coronary artery in the second image of the target region is 300 HU - 400 HU, the processing device 110 may determine the enhancement score as 3 points or determine the enhancement grade as a third grade; if the mean CT value of the coronary artery in the second image of the target region is 200 HU - 300 HU, the processing device 110 may determine the enhancement score as 2 points or determine the enhancement grade as a fourth grade; if the mean CT value of the coronary artery in the second image of the target region is less than 200 HU, the processing device 110 may determine the enhancement score as 1 point or determine the enhancement grade as a fifth grade. In some embodiments, the processing device 110 may determine the enhancement score or grade based on a CT standard value of the coronary artery. For example, the CT standard value of the coronary artery may be set to be 300 HU, if the CT mean value of the coronary artery in the second image of the target region is greater than 300 HU, the processing device 110 may determine the enhancement score as 5; if the CT mean value of the coronary artery in the second image of the target region is less than 300 HU, the processing device 110 may determine the enhancement score as 1.

In some embodiments, the processing device 110 may determine a comprehensive image quality evaluation result by combining the morphology score/the morphology grade and the enhancement score/the enhancement grade of the coronary artery in any feasible way, such as a weighted average. For example, the processing device 110 may determine the comprehensive image quality evaluation result according to the Equation of $E = a * X + b * Y,$ where $a$ and $b$ represent weight coefficients, and $X$ and $Y$ represent scores or grades corresponding to evaluation indicators. For example, $X$ represents the morphology score of the coronary artery, and $Y$ represents the enhancement score of the coronary artery. If $a = 0.7,$ $b = 0.3,$ $X$ is equal to a score of 5, and $Y$ is equal to a score of 3, the comprehensive image quality evaluation result may have a comprehensive score of $E = 5 * 0.7 + 3 * 0.3 = 4.4.$

It should be understood that the above-mentioned evaluation indicators and their corresponding values are merely provided for illustration purposes. In some embodiments, the one or more evaluation indicators, the evaluation standard, the weight(s), etc., of the image quality may be adjusted periodically or at any time according to actual conditions. For example, the one or more evaluation indicators may include an anatomical sharpness, a contrast of the target region, a morphological fit degree of the target region, an enhancement degree of the target region, an image signal uniformity, an image noise level, an artifact inhibition degree, an edge sharpness of a coronary artery, or the like, or any combination thereof. As another example, the user may adjust the weight(s) through one or more open configuration items, which is not limited herein.

In some embodiments, the processing device 110 may perform a preprocessing on the first image before the image quality evaluation. For example, the preprocessing may include a horizontal flipping, a horizontal and/or vertical translation, a random rotation, an edge filling, a contrast change, an image normalization, or the like, or any combination thereof.

Merely by way of illustration purposes, the preset evaluation tool may include a preset model such as a trained image quality evaluation model. The processing device 110 may determine the image quality evaluation result of the first image using the trained image quality evaluation model. For example, the trained image quality evaluation model may include a GoogLeNeT model, an AlexNet model, a VGG model, a ResNet model, or the like. In some embodiments, an input of the trained image quality evaluation model may be the first image, and an output of the image quality evaluation model may be the image quality score or the image quality grade of the first image, such as a score of [0,10], or a grade from the first grade to the third grade. In some embodiments, the output of the trained image quality evaluation model may be whether the first image needs correction. For example, the output of the trained image quality evaluation model may be 1 or 0, wherein 1 means no correction is needed and 0 means a correction is needed. In some embodiments, each of the evaluation indicators may correspond to a single trained image quality evaluation model. For example, the processing device 110 may determine the morphology score of the coronary artery by a morphology evaluation model. As another example, the processing device 110 may determine the enhancement score by an enhancement evaluation model. In some embodiments, multiple evaluation indicators may correspond to the same image quality evaluation model. For example, the image quality evaluation model may simultaneously evaluate the morphology fit degree of the coronary artery and the enhancement degree corresponding to the coronary artery. In some embodiments, the output of the trained image quality evaluation model may be an evaluation result corresponding to each of the evaluation indicator(s). For example, the output of the trained image quality evaluation model may be 5 points for the morphology fit degree of the coronary artery and 3 points for the enhancement degree. In some embodiments, the output of the trained image quality evaluation model may be a comprehensive image quality evaluation result of two or more evaluation indicators. In some embodiments, an initial model may be trained based on multiple groups of training samples with labels to obtain the trained image quality evaluation model. In some embodiments, when the trained image quality evaluation model meets a preset training condition, the training process may end and the trained image quality evaluation model may be determined. The preset training condition may include that a result of a loss function converges or the loss function is smaller than a preset value.

In some embodiments, the image segmentation algorithm and/or the preset evaluation tool may be stored in the form of software in the storage device (e.g., the storage device 130). The processing device 110 may obtain the image segmentation algorithm and/or the preset evaluation tool from the storage device.

In 630, whether the image quality evaluation result of the first image satisfies a preset condition may be determined. In some embodiments, operation 630 may be performed by the processing device 110 (e.g., the determination module 420 or a quality evaluation unit of the determination module 420).

The preset condition may reflect a desired image quality. For example, the preset condition may include a desired image quality score or a desired image quality grade that the first image needs to satisfy. In some embodiments, the processing device 110 may determine whether the image quality evaluation result of the first image satisfies the preset condition. In response to determining that the image quality evaluation result of the first image satisfies the preset condition, the processing device 110 may output the first image as a final medical image of the target object and the process may end. In response to determining that the image quality evaluation result of the first image does not satisfy the preset condition, the processing device 110 may proceed to operation 633 to automatically perform an image correction algorithm. In some embodiments, operation 633 may be performed by the correction module 430.

In some embodiments, the preset condition may include a desired image quality score or a desired image quality grade that the first image needs to satisfy, for example, a preset threshold. In some embodiments, the preset threshold may be any reasonable value. For example, when the image quality score is a 10-points scale, the preset threshold may be set to 8 points. In some embodiments, the preset threshold may be determined based on the diagnostic need of the target object. For example, in coronary CTA, the image quality score of the coronary artery may be set as 1-5 points. Accordingly, the preset threshold may be set as 3 points. If the image quality score of the first image is equal to or greater than 3, the first image may be diagnosable, and the processing device 110 may output the first image directly; if the image quality score is less than 3 points, the first image may be undiagnosable, the processing device 110 may automatically perform an image correction algorithm for improving the coronary image quality. In some embodiments, the preset threshold may be adjusted periodically or at any time.

In some embodiments, the image correction algorithm may be any feasible correction algorithm, for example, a filtered back-projection reconstruction algorithm, a registration algorithm, a noise processing algorithm, a contrast processing algorithm, an artifact removal algorithm, etc., which are not limited in the present disclosure. In some embodiments, the processing device 110 may determine the image correction algorithm according to the image quality evaluation result of the first image. For example, different artifact correction algorithms may be selected for different image quality scores (such as 3 points and 1 point). As another example, if the morphology score of the coronary artery is high and the enhancement score is low, different image correction algorithms may be selected. In some embodiments, the processing device 110 may determine a corresponding image correction algorithm according to the preset evaluation tool corresponding to the image quality evaluation. For example, if the image quality evaluation algorithm is an image noise evaluation algorithm (e.g., an image noise evaluation model), the corresponding image correction algorithm may be a noise processing algorithm. As another example, if the image quality evaluation algorithm is an image artifact evaluation algorithm, the corresponding correction algorithm may be an algorithm for removing or reducing artifacts. In some embodiments, the processing device 110 may determine the corresponding correction algorithm according to the image quality of the first image and the preset evaluation tool corresponding to the image quality evaluation. In some embodiments, different image quality evaluation results and/or different image quality evaluation algorithms may correspond to the same or different correction algorithms. In some embodiments, the image correction algorithm may be stored in software form in a storage device (e.g., the storage device 130).

In 640, a corrected first image may be generated. In some embodiments, operation 640 may be performed by the processing device 110 (e.g., the correction module 430).

In some embodiments, the processing device 110 may generate the corrected first image by performing the image correction algorithm on the first image. In some embodiments, the image quality of the corrected first image may satisfy the preset condition or not. For example, the corrected first image may include motion artifacts (e.g., include motion artifacts that are more than a preset artifact threshold). As another example, the corrected first image may include no motion artifacts (e.g., include motion artifacts that are fewer than the preset artifact threshold).

In 650, an image quality evaluation result of the corrected first image may be determined using the preset evaluation tool. In some embodiments, operation 650 may be performed by the processing device 110 (e.g., the determination module 420 or the quality evaluation unit of the determination module 420).

In some embodiments, the processing device 110 may determine a third image of the target region of the target object based on the corrected first image. The processing device 110 may determine the image quality evaluation result of the corrected first image based on the third image of the target region using the preset evaluation tool. In some embodiments, the processing device 110 may determine a quality score (or quality grade) directly based on the corrected first image. In some embodiments, the processing device 110 may determine the image quality evaluation result of the corrected first image using an algorithm that is the same as or different from that for evaluating the image quality of the first image. Merely by way of example, the processing device 110 may determine the image quality evaluation result of the corrected first image using an algorithm that is different from that used to determine the image quality evaluation result of the first image. More descriptions regarding the image quality evaluation may be found elsewhere in the present disclosure (e.g., the operation 620 and relevant descriptions thereof).

In some embodiments, since individual differences and other reasons, the corrected first image may still not meet the preset condition. For example, the corrected first image may still have artifacts (e.g., greater than a preset artifact threshold) and/or poor quality. The determination of the image quality evaluation result of the corrected first image may be used for further evaluating/determining the image correction effect.

In 660, whether the image quality evaluation result of the corrected first image satisfies the preset condition may be determined. In some embodiments, operation 660 may be performed by the processing device 110 (e.g., the determination module 420 or the quality evaluation unit of the determination module 420).

In some embodiments, the processing device 110 may determine whether the quality score of the corrected first image is less than the preset threshold. In response to determining that the quality score of the corrected first image is greater than or equal to the preset threshold, the processing device 110 may output the corrected first image as the final medical image of the target object, and the process may end. In response to determining that the quality score of the corrected first image is less than the preset threshold, the process 600 may proceed to operation 663. In 663, the processing device 110 may send a prompt to a user (e.g., a technician or a doctor). In some embodiments, the prompting manner may include a music prompt, a voice broadcast prompt, an information prompt (e.g., a message notify), a video prompt, or the like, or any combination thereof. In some embodiments, the processing device 110 may send the information prompt and/or the corrected first image to a terminal device (e.g., the terminal device 120) for prompting the user.

In some embodiments, when the prompt is sent to the user in response that the image quality of the corrected first image still does not satisfy the preset condition, the user may manually further determine the image quality of the corrected first image. Alternatively, the target object may be rescanned to obtain higher quality image(s), which in turn improves the diagnostic accuracy.

In some embodiments, a preset condition corresponding to the first image before image correction (e.g., the preset condition in 630) and a preset condition corresponding to the corrected first image after image correction (e.g., the preset condition in 660) may be set as different evaluation conditions, for example, preset thresholds corresponding to the preset conditions may be set to be different values. For example, a preset threshold corresponding to the first image may be set to be less than a preset threshold corresponding to the corrected first image. In some embodiments, the preset threshold corresponding to the corrected first image may be adjusted according to the user's further determination of the image quality of the corrected first image For example, when the user receives the prompt and manually determines that the corrected first image can be used for diagnosis, the preset threshold corresponding to the corrected first image may be adjusted to be lower.

In some embodiments, the process 600 may be used for correcting images other than medical images. In some embodiments, one or more additional operations may be added in the process 600. For example, an additional operation may be added for further image correction. When the quality score of the corrected first image is less than the preset threshold in operation 660, the processing device 110 may automatically perform a new correction algorithm for correcting the first image or the corrected first image.

FIG. 7 is a flowchart illustrating an exemplary process for image correction according to some embodiments of the present disclosure. In some embodiments, one or more operations of process 700 illustrated in FIG. 7 may be implemented in the image correction system 100 illustrated in FIG. 1. For example, process 700 illustrated in FIG. 7 may be stored in the storage device 130 in the form of instructions, and invoked and/or executed by the processing device 110.

In 710, multiple motion vector fields of a target object corresponding to multiple motion time points may be determined based on a reference time point. In some embodiments, operation 710 may be performed by the processing device 110 (e.g., the determination module 420 or a motion vector field determination unit of the determination module 420).

As used herein, the reference time point may refer to a time point that is used to describe a relative displacement of the target object during imaging. In some embodiments, an imaging process may be performed on a target object for obtaining raw data (or scanning data) of the target object. The reference time point may be any time point within the imaging process. For example, the reference time point may correspond to a time point or sub-phase within a target phase (e.g., the target phase as described in operation 504 in FIG. 5) during the imaging of the target object. More description regarding the reference time point may be found elsewhere in the present disclosure (e.g., operation 810 and the relevant description thereof).

As used herein, a motion time point may be a time point selected at intervals from a duration (or period) of the imaging process of the target object. In some embodiments, the multiple motion time points may be any time points in the imaging process of the target object. More description regarding the multiple motion time points may be found elsewhere in the present disclosure (e.g., in operation 810 and the relevant description thereof).

As used herein, a motion vector field may reflect the motion of the target object. A motion vector field may be a set of motion vectors including at least two space points of the target object in the image domain. As used herein, a motion vector may represent a displacement of a pixel corresponding to a space point of the target object in the image domain at two time points.

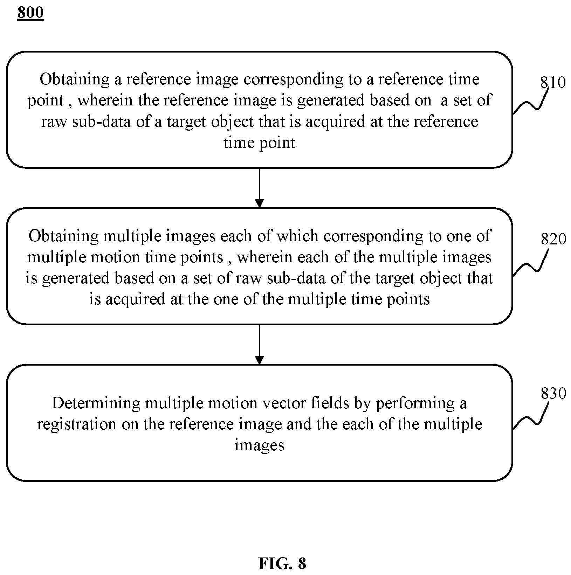

In some embodiments, the processing device 110 may determine the multiple motion vector fields of the target object corresponding to the multiple motion time points based on a set of raw sub-data of the target object acquired at the reference time point and multiple sets of raw sub-data of the target object acquired at the multiple motion time points. As shown in FIG. 8, the processing device 110 may determine the multiple motion vector fields in the image domain based on the raw data of the target object in the data domain. More descriptions regarding the determination of the multiple motion vector fields may be found elsewhere in the present disclosure (e.g., operation 830 and the relevant description thereof).

In 720, for each of the multiple motion time points, an image motion deviation corresponding to the motion time point may be determined based on a motion vector field corresponding to the motion time point and a reconstructed image corresponding to the motion time point. In some embodiments, operation 720 may be performed by the processing device 110 (e.g., the determination module 420 or an image motion deviation determination unit of the determination module 420).

As used herein, an image motion deviation may refer to displacements of some pixels in a reconstructed image (also referred to as a motion reconstructed image) corresponding to a motion time point which is caused by a displacement of the target object at the motion time point compared with the reference time point. In some embodiments, the representation of the image motion deviation may be motion artifacts, for example, an image deformation, an image overlap, an image loss, an image blur, etc. More descriptions regarding the motion artifacts may be found elsewhere in the present disclosure (e.g., operation 820 and the relevant description thereof).

In some embodiments, the target object may be displaced at the motion time point relative to the reference time point. Displacements of a plurality of space points of the target object at the motion time point may cause a plurality of pixels corresponding to the plurality of space points in the motion reconstructed image corresponding to the motion time point to be displaced relative to a reference reconstructed image corresponding to the reference time point to generate motion artifacts in the motion reconstructed image.

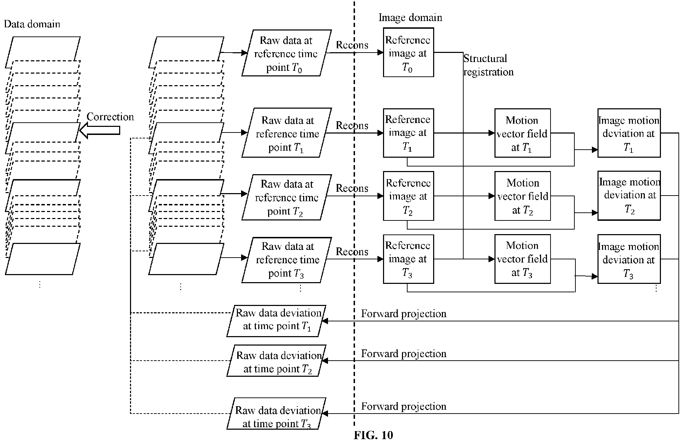

In some embodiments, the processing device 110 may determine an image motion deviation corresponding to the each motion time point based on a motion vector field corresponding to the each motion time point and a motion reconstructed image corresponding to the each motion time point. For example, for the each motion time point, the processing device 110 may determine the image motion deviation by making a difference between each pixel in the motion reconstructed image and a motion vector corresponding to the each pixel in the motion vector field. For illustration purposes as shown in FIG. 10, the processing device 110 (e.g., the image motion deviation determination unit) may determine an image motion deviation corresponding to time point $T_1$ (also referred to as at time point $T_1$) based on a motion reconstructed image at time point $T_1$ and a motion vector field at time point $T_1$, determine an image motion deviation at time point $T_2$ based on a motion reconstructed image at time point $T_2$ and a motion vector field at time point $T_2$, determine an image motion deviation based on a motion reconstructed image at time point $T_3$ and a motion vector field at time point $T_3$, or the like.

In 730, for each of the multiple motion time points, a raw data deviation corresponding to the motion time point may be determined based on the image motion deviation corresponding to the motion time point. In some embodiments, operation 730 may be performed by the processing device 110 (e.g., the determination module 420 or a raw data deviation determination unit of the determination module 420).

As used herein, a raw data deviation may refer to a deviation of scanning data (e.g., a set of raw sub-data) acquired at the motion time point which is caused by the displacement of the target object at the motion time point.

In some embodiments, the processing device 110 (e.g., the raw data deviation determination unit) may convert an image motion deviation corresponding to the motion time point into a raw data deviation corresponding to the motion time point using a forward projection algorithm. The forward projection algorithm may be an algorithm that converts relevant information about the target object in the image domain into information in the data domain. In some embodiments, the forward projection algorithm may include a ray drive algorithm, a voxel drive algorithm, a distance drive algorithm, or the like, or any combination thereof.

As shown in FIG. 10, the processing device 110 (e.g., the raw data deviation determination unit) may convert image motion deviations of the target object at time point $T_1$, time point $T_2$, and time point $T_3$ in the image domain into raw data deviations corresponding to time point $T_1$, time point $T_2$, and time point $T_3$ in the data domain using the forward projection algorithm.

In 740, corrected raw data of the target object may be generated by correcting, based on a raw data deviation corresponding to at least one of the multiple motion time points, raw data of the target object that is acquired by imaging the target object. In some embodiments, operation 740 may be performed by the processing device 110 (e.g., the correction module 430).

As mentioned above, a motion time point may be a time point selected at intervals from the duration of the imaging process of the target object which is used as a time point for correction of the raw data acquired at the motion time point.

A corrected time point (also referred to as a target time point) may refer to a time point corresponding to a set of raw sub-data of the target object to be corrected. In some embodiments, when the corrected time point is a motion time point, the processing device 110 may determine a raw data deviation corresponding to the motion time point as a corrected value for correcting a set of raw sub-data corresponding to the motion time point. More descriptions regarding correcting the set of raw sub-data based on the corrected value may be found elsewhere in the present disclosure (e.g., operation 930 and the relevant description thereof).

In some embodiments, for any two motion time points (e.g., two consecutive motion time points) in the multiple motion time points, the processing device 110 may generate corrected raw data corresponding to a period between the two consecutive motion time points by correcting, based on raw data deviations corresponding to the two consecutive motion time points, each set of raw sub-data that is acquired during the period between the two consecutive motion time points. More descriptions regarding determining the corrected raw data during the period may be found in FIG. 9 and the relevant description thereof).

In 750, a corrected image of the target object may be generated based on the corrected raw data of the target object. In some embodiments, operation 750 may be performed by the processing device 110 (e.g., the reconstruction module 440).

In some embodiments, the processing device 110 may generate, based on the corrected raw data of the target object, the corrected image of the target object using a reconstruction algorithm. The reconstruction algorithm may be an algorithm that converts the relevant information of the target object in the data domain into the information in the image domain. More descriptions regarding the reconstruction algorithm may be found elsewhere in the present disclosure (e.g., operation 810 and the relevant description thereof).

In some embodiments, in operation 720, the processing device 110 may determine a registered image by registering the reconstructed image corresponding to the motion time point. The processing device 110 may determine the image motion deviation corresponding to the motion time point by determining a difference between the reconstructed image corresponding to the motion time point and the registered image. In some embodiments, the processing device 110 may process the reconstructed image corresponding to the motion time point based on a regularization constraint. The regularization constraint may include Histogram distribution constraint, entropy function constraint, kernel norm constraint, or the like, or any combination thereof. The processing device 110 may determine the image motion deviation corresponding to the motion time point by determining a difference between the processed image and the reconstructed image.

FIG. 8 is a flowchart illustrating an exemplary process for determining motion vector fields according to some embodiments of the present disclosure. In some embodiments, one or more operations of process 800 illustrated in FIG. 8 may be implemented in the image correction system 100 illustrated in FIG. 1. For example, process 800 illustrated in FIG. 8 may be stored in the storage device 130 in the form of instructions, and invoked and/or executed by the processing device 110 In some embodiments, operation 710 in FIG. 7 may be achieved by operations of process 800.

In 810, a reference image (also referred to as a reference reconstructed image) corresponding to a reference time point may be obtained. The reference image may be generated based on a set of raw sub-data of a target object that is acquired at the reference time point. In some embodiments, operation 810 may be performed by the processing device 110 (e.g., the obtaining module 410, the determination module 420, or the reconstruction module 440).

In some embodiments, for CT imaging of the target object, scanning data (or raw data) of the target object may be data acquired by performing sectional imaging (i.e., a tomography) on the target object using an imaging device (e.g., the imaging device 150). The tomography may refer to imaging related to a section of the target object perpendicular to a scanning direction of the tomography. For example, the scanning direction may be from top to bottom along with the target object, and the section may be a cross section. As another example, the scanning direction may be from left to right along with the target object, and the section may be a sagittal section. As further another example, the scanning direction may be from front to back along with the target object, and the section may be a coronal section.

In some embodiments, for each section of the target object, the imaging device 150 may transmit signals from a plurality of angles through the section, and receive attenuated signals after the signals pass through the section from the plurality of angles. In some embodiments, scanning data or raw data may include attenuation intensities of the signals at the plurality of angles before and after the signals pass through the section. Further, the imaging device 150 may obtain scanning data of a plurality of sections of the target object along the scanning direction.

As used herein, a time point may refer to a transient time during the tomography of the target object. In some embodiments, the time point may have a very short time length, such as 0.01 seconds. In some embodiments, the imaging device 150 may obtain raw data of one or more sections at each time point during the tomography. It should be understood that the slower the target object moves along the scanning direction, the more raw data of the section may be obtained at each time point.

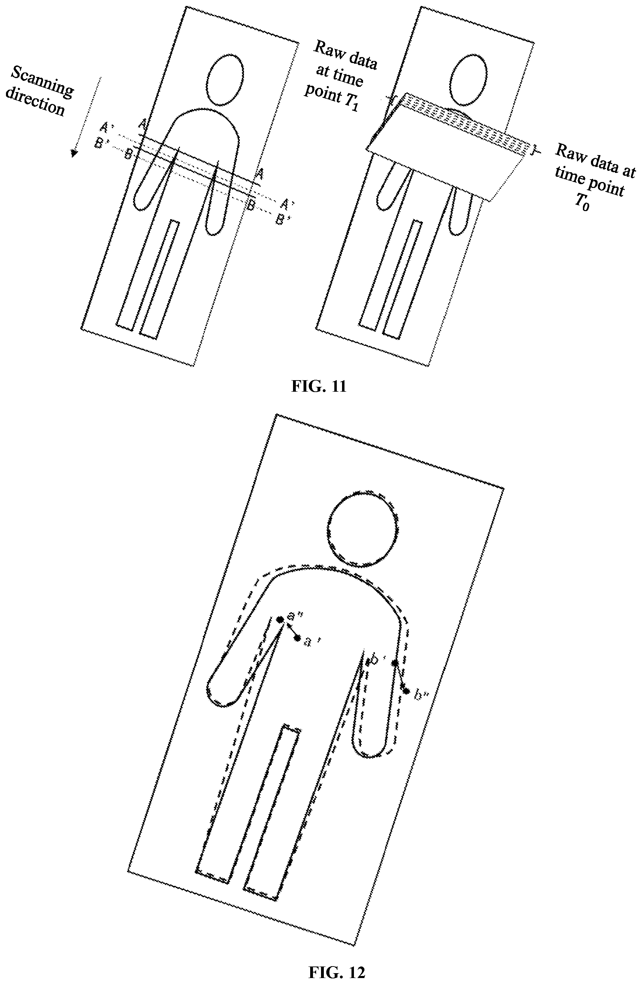

In some embodiments, raw data of sections obtained at different time points may overlap. For example, the imaging device 150 may move relatively from top to bottom along the target object, and the sections may be cross sections of the target object. During the tomography, scanning data of 50 sections may be obtained at each time point. As shown in FIG. 11, the imaging device 150 may move from top to bottom along the target object and obtain scanning data of 50 cross sections between cross section AA and cross section BB at $T_0$ time point; scanning data of 50 cross sections from the cross section A'A' to the cross section B'B' may be obtained at $T_1$ time point; scanning data of 25 cross sections from the cross section A'A' to the cross section BB may be obtained at both the $T_0$ time point and the $T_1$ time point.

The reference time point may be a time point used to describe the relative displacement of the target object during the tomography. It may be understood that during the tomography, the target object may be displaced, i.e., a position of the target object at any time point may change relative to other time points. In order to better describe the different displacements of the target object at different time points, a time point may be (e.g., arbitrarily) selected from a plurality of time points during the tomography as the reference time point. For example, the $T_0$ time point may be selected as the reference time point. A displacement of the target object at any other time point may be a change of the position of the target object at the other time point relative to the position of the target object at the reference time point.

In some embodiments, the reference image may be a reconstructed image generated based on the set of raw sub-data of the target object using a reconstruction algorithm. The reconstruction algorithm may be an algorithm that converts the relevant information of the target object in the data domain into the information in the image domain. In some embodiments, the reconstruction algorithm may include a back projection (BP) algorithm, a filtered back projection (FBP) algorithm, an adaptive statistical iterative reconstruction (Asir) algorithm, a model-based iterative reconstruction (MBIR) algorithm, and an iterative reconstruction in image space (IRIS) algorithm, or the like, or any combination thereof.

In some embodiments, the reconstructed image may further include a background region or other organ, body, object, damaged part, tumor, or the like, other than the target object. In some embodiments, the processing device 110 (e.g., the motion vector field determination unit) may determine (e.g., segment or extract) a region of the target object (a region of interest (ROI)) in the reconstructed image using an image segmentation algorithm. In some embodiments, the image segmentation algorithm may include a traditional segmentation algorithm (e.g., a threshold algorithm, a region growth algorithm, an edge detection algorithm, etc.), a segmentation algorithm incorporating specific tools (e.g., a genetic algorithm, a wavelet analysis, a wavelet transform, an active contour model, etc.), and a segmentation algorithm based on neural network model(s) (e.g., a fully convolutional network model algorithm, a visual geometry group network model algorithm, a mask region convolutional neural network model algorithm, etc.).

For example, taking coronary arteries of the heart being the target object as an example, the processing device 110 (e.g., the motion vector field determination unit) may obtain a reconstructed image of the heart (including the coronary arteries of the heart, the myocardium of the heart, a background region, etc.) based on scanning data of the heart. The processing device 110 may determine (e.g., extract) a blood vessel centerline of the heart using a blood vessel centerline extraction algorithm. The processing device 110 may determine a reconstructed image of the coronary arteries of the heart using the image segmentation algorithm based on the blood vessel centerline. In some embodiments, the blood vessel centerline extraction algorithm may include a manual vessel centerline extraction algorithm, a vessel centerline extraction algorithm based on a minimum path, a vessel centerline extraction algorithm based on an active contour model, or the like, or any combination thereof.

In some embodiments, the reconstructed image may include a two-dimensional (2D) image or a three-dimensional (3D) image (e.g., consisting of a series of 2D slices or 2D image layers). In some embodiments, the processing device 110 (e.g., the motion vector field determination unit) may stack reconstructed images of a plurality of sections corresponding to any time point into a 3D reconstructed image along the scanning direction.

Taking $T_0$ time point in FIG. 11 as an example, the processing device 110 (e.g., the motion vector field determination unit) may stack reconstructed images of 50 sections corresponding to $T_0$ time point along the direction from top to bottom along the target object to obtain a 3D reconstructed image of the target object from section AA to section BB. Further, the processing device 110 may determine, based on the 3D reconstructed image using the image segmentation algorithm, a 3D ROI model (e.g., a heart coronary artery model).

As mentioned above, the imaging device 150 may obtain scanning data of one or more sections at each time point of the tomography. Therefore, one or more reconstructed images may be obtained based on the scanning data of one or more sections acquired at each time point.

The reference image may be a reconstructed image of one or more sections of the target object that is generated using the reconstruction algorithm based on the scanning data of one or more sections acquired at the reference time point. As shown in FIG. 10, taking $T_0$ time point as the reference time point, the processing device 110 (e.g., the motion vector field determination unit) may convert scanning data of the target object at the reference time point $T_0$ in the data domain into a reference image at $T_0$ time point in the image domain through/using the reconstruction algorithm.

In some embodiments, the processing device 110 (e.g., the motion vector field determination unit) may stack reconstructed images of the plurality of sections corresponding to the reference time point into a 3D reference image along the scanning direction. For example, a heart coronary artery model that is determined based on the scanning data at the reference time point $T_0$ may be designated as a heart coronary artery reference model.

In 820, multiple images (also referred to as multiple motion reconstructed images) each of which corresponding to one of multiple motion time points may be obtained. Each of the multiple images may be generated based on a set of raw sub-data of the target object that is acquired at the one of the multiple motion time points. In some embodiments, operation 820 may be performed by the processing device 110 (e.g., the obtaining module 410, the determination module 420, or the reconstruction module 440).

A motion artifact may refer to a portion of an image where a space point of the target object does not correspond to a pixel point of the target object in the image domain. As mentioned above, during the tomography of the target object, the target object may be displaced, resulting in motion artifacts in a medical image of the target object that is reconstructed based on the scanning data of the target object. In some embodiments, the motion artifacts may express as an image deformation, an image overlap, an image loss, an image blur, or the like, or any combination thereof.

In some embodiments, the processing device 110 (e.g., the motion vector field determination unit) may remove the motion artifacts in the medical image by correcting the scanning data or raw data corresponding to the medical image.

The motion time point may be a time point selected at intervals from a plurality of time points of the imaging process (e.g., the tomography) and the scanning data corresponding to the time point may be corrected. It should be understood that displacements of the target object may be continuous and uneven. In order to improve the efficiency of correction, the displacement of the target object at each time point may be estimated based on displacements of the target object at adjacent time points before and after the each time point. Therefore, some time points may be selected at intervals from the plurality of time points of the imaging process, and scanning data corresponding to the some time points may be obtained for determining correction values. Then correction values of the scanning data corresponding to all time points may be determined based on the correction values of the scanning data corresponding to the some time points. Merely by way of example, the multiple motion time points may include $T_1$, $T_2$, $T_3$,..., $T_N$.

In some embodiments, an interval between two adjacent motion time points of the multiple motion time points may be the same. For example, the multiple motion time points may be selected every 0.2 seconds. In some embodiments, intervals between the multiple motion time points may be different. For example, in an initial stage of the imaging process, it may be easy for a patient to remain stationary, a frequency (or times) of displacement of the target object may be correspondingly small, and the interval between two adjacent motion time points of the multiple motion time points at an initial stage of imaging may be large, such as 0.5s; in a later stage of the imaging process, it may be difficult for the patient to remain stationary, the frequency (or the times) of displacement of the target object may be correspondingly large, and the interval between two adjacent motion time points of the multiple motion time points at the later stage may be small, such as 0.1s.

In some embodiments, an image of the multiple images corresponding to a motion time point may be a reconstructed image of one or more sections of the target object that is generated using a reconstruction algorithm based on scanning data of one or more sections (e.g., a set of raw sub-data) of the target object acquired at the motion time point. As shown in FIG. 10, taking time point $T_1$, time point $T_2$, time point $T_3$ ... as the motion time points, the processing device 110 (e.g., motion vector field determination unit) may convert scanning data at motion time point $T_1$, scanning data at motion time point $T_2$, scanning data at motion time point $T_3$ in the data domain into a reconstructed image at motion time point $T_1$, a reconstructed image at motion time point $T_2$, and a reconstructed image at motion time point $T_3$ in the image domain through/using the reconstruction algorithm.

In some embodiments, similar to the reference image, the processing device 110 (e.g., the motion vector field determination unit) may stack reconstructed images of a plurality of sections corresponding to the motion time point into a 3D image along the scanning direction. For example, taking the motion time point $T_1$ in FIG. 11 as an example, the processing device 110 (e.g., the motion vector field determination unit) may stack reconstructed images of 50 sections corresponding to the motion time point along the direction from top to bottom along the target object to obtain a 3D image of the target object from cross section A'A' to cross section B'B'.

In some embodiments, similar to the reference reconstructed image, the processing device 110 (e.g., the motion vector field acquisition unit) may determine an ROI (e.g., a motion reconstructed image of the heart coronary arteries) in a 2D reconstructed image or an ROI model (e.g., a heart coronary artery motion model) in a 3D reconstructed image through an image segmentation algorithm as described elsewhere in the present disclosure.

In 830, multiple motion vector fields may be determined by performing a registration on the reference image and the each of the multiple images. In some embodiments, operation 830 may be performed by the processing device 110 (e.g., the determination module 420 or the motion vector field determination unit of the determination module 420).

As mentioned above, the reference time point may be a time point used to describe relative displacements of the target object during the imaging process (e.g., the tomography). In some embodiments, a relative displacement of the target object at a motion time point may be a position change of the target object between the motion time point and the reference time point.

In some embodiments, as the target object includes a plurality of space points, a displacement of the target object at the motion time point may be displacements of the plurality of space points of the target object at the motion time point. In some embodiments, the displacements of the plurality of space points of the target object at the motion time point may cause displacements of pixel points corresponding to the plurality of space points in an image corresponding to the motion time point, thereby generating motion artifacts in the image corresponding to the motion time point. In order to describe a displacement of a pixel point corresponding to a space point in the image at the motion time point, it may be necessary to determine positions of the pixel point corresponding to the space point in the image corresponding to the motion time point and the reference image.

In some embodiments, the processing device 110 (e.g., the motion vector field determination unit) may determine positions of a space point in the image corresponding to the motion time point and the reference image corresponding to the reference time point by a registration algorithm based on the reference image and the image. The registration algorithm may be an algorithm used to determine corresponding relationships between a plurality of pixel points corresponding to the plurality of space points of the target object in different images. For example, the processing device 110 (e.g., the motion vector field determination unit) may determine a corresponding relationship between a plurality of pixel points corresponding to the plurality of space points in an image at a motion time point and a plurality of pixel points corresponding to the plurality of space points in the reference image at the reference time point through/using the registration algorithm.

It should be understood that there may be an overlap between reconstructed images of sections acquired at the reference time point and the motion time point(s). The processing device 110 (e.g., the processing device 110 (e.g., the motion vector field determination unit)) may register the reference image and each of the multiple images based on a target feature in an overlapping part of the reference image and each of the multiple images. As shown in FIG. 11, the processing device 110 (e.g., the motion vector field determination unit) may determine a heart coronary artery reference model from the section AA to the section BB using the reconstruction algorithm and the image segmentation algorithm based on scanning data from the cross section AA to the cross section BB acquired at reference time point $T_0$. The processing device 110 (e.g., the motion vector field determination unit) may determine a heart coronary artery motion model from the cross section A'A' to the cross section B'B' using the reconstruction algorithm and the image segmentation algorithm based on scanning data from the cross section A'A' to the cross section B'B' acquired at motion time point $T_1$. The scanning data acquired at reference time point $T_0$ and the scanning data acquired at motion time point $T_1$ may both include scanning data of 25 sections from the section A'A' to the section BB, and then both the heart coronary reference model and the heart coronary motion model may include a model structure from the cross section A'A' to the cross section BB. The processing device 110 (e.g., the motion vector field determination unit) may determine a corresponding relationship between the heart coronary artery reference model and the heart coronary artery motion model based on a corresponding relationship between at least some pixel points in the model structure from the cross section A'A' to the cross section BB in the heart coronary reference model and the heart coronary motion model through/using the registration algorithm.

In some embodiments, the registration algorithm may include a point-based registration algorithm (e.g., an anatomical marker-based registration algorithm), a curve based registration algorithm, a surface-based registration algorithm (e.g., a surface contour-based registration algorithm), a spatial alignment registration algorithm, a cross-correlation configuration registration algorithm, a mutual information-based registration algorithm, a sequential similarity detection algorithm (SSDA), a nonlinear transformation registration algorithm B-spline registration algorithm, or the like, or any combination thereof.

In some embodiments, the processing device 110 (e.g., the motion vector field determination unit) may obtain at least one first control point of the reference image and at least one second control point of the image. Each of the at least one first control point may correspond to one of the at least one second control point. A first control point and a corresponding second control point may be pixel points corresponding to the same space point of the target object in the reference image and the image respectively. In some embodiments, the at least one first control point and the at least one second control point may correspond to a same target feature of the target object. In some embodiments, the processing device 110 (e.g., the motion vector field determination unit) may determine (e.g., search) first control point(s) and second control point(s) by a manual search, an automatic search, a semi-automatic search, or the like, or any combination thereof. In some embodiments, the processing device 110 (e.g., the motion vector field determination unit) may determine (e.g., select) the at least one first control point and the at least one second control point from the searched first control points and the searched second control points through/by a similarity measurement. In some embodiments, the similarity measurement may include a mutual information-based measure, a Fourier analysis-based measure, or the like, or any combination thereof.

In some embodiments, the processing device 110 (e.g., the motion vector field determination unit) may establish a registration model (e.g., a structural registration model) based on the at least one first control point and the at least one second control point. For example, the processing device 110 (e.g., the motion vector field determination unit) may determine transformation parameters between a coordinate system of the reference image and a coordinate system of the image based on a position of the at least one first control point in the coordinate system of the reference image and a position of the at least one corresponding second control point in the coordinate system of the image. The processing device 110 may establish the structural registration model based on the transformation parameters.

In some embodiments, the processing device 110 (e.g., the motion vector field determination unit) may determine a pixel corresponding relationship between the reference image and the image based on the registration model (e.g., the structural registration model). For example, the processing device 110 (e.g., the motion vector field determination unit) may transform pixel points of the image into the coordinate system of the reference image through an image transformation based on the structural registration model to determine the pixel corresponding relationship between the reference image and the image. In some embodiments, the image transformation may include a rigid transformation, an affine transformation, a projection transformation, a nonlinear transformation, or the like, or any combination thereof.

For illustration purposes, as shown in FIG. 12, $a$ may be a space point of a heart coronary artery between the section A'A' and the section BB of the heart coronary artery. From reference time point $T_0$ to motion time point $T_1$, the target object may raise both hands during the imaging process, and the space point $a$ may be displaced, thus moving from $a'$ to $a''$ in the image domain. Therefore, the space point $a$ of the target object may correspond to pixel point $a'$ in the heart coronary artery reference model and pixel point $a''$ in the heart coronary artery motion model. The processing device 110 (e.g., the motion vector field determination unit) may transform pixel point $a''$ in the heart coronary artery motion model to the coordinate system of the heart coronary artery reference model through/using the registration algorithm to determine a corresponding relationship between pixel point $a'$ in the heart coronary artery reference model and pixel point $a''$ in the heart coronary artery motion model.

A motion vector may be a directed line segment in the image domain. In some embodiments, the motion vector may represent a displacement of pixel points (that correspond to the same space point of the target object) corresponding to two time points in the image domain. As mentioned above, the reference time point may be a time point used to describe the relative displacement of the target object during the imaging process (e.g., the tomography). In some embodiments, a motion vector of any space point of the target object in the image domain may be a displacement of a pixel point corresponding to the space point at the motion time point relative to a pixel point corresponding to the space point at the reference time point. For example, a position of the pixel point at the reference time point may be taken as a starting point of the motion vector, and a position of the pixel point at the motion time point may be taken as an endpoint of the motion vector. A displacement direction may the direction of the motion vector, and a displacement size (e.g., a displacement value) may be the length of the motion vector.

Continuing to take FIG. 12 as an example, the space point $a$ may be displaced, e.g., moving from $a'$ to $a''$ in the image domain. In the coordinate system of the reference image, a coordinate of pixel point $a'$ corresponding to the space point $a$ in the heart coronary artery reference model may be $(x_{a'}, y_{a'}, z_{a'})$, and a coordinate of pixel point $a''$ corresponding to the space point $a$ in the heart coronary motion model may be $(x_{a''}, y_{a''}, z_{a''})$. A displacement may be represented by a motion

vector $\overrightarrow{a'a''} = (x_{a''} - x_{a'}, \quad y_{a''} - y_{a'}, \quad z_{a''} - z_{a'})$, which means that at motion time point $T_1$, the motion vector of the space point $a$ in the image domain may be $\overrightarrow{a'a''}$.

A motion vector field may be a collection of motion vectors in the image domain of at least two space points of the target object. As mentioned above, displacements of different space points of the target object may be different. A displacement of a pixel point corresponding to each space point in the image domain may be represented by a motion vector.

Continuing to take FIG. 12 as an example, from reference time point $T_0$ to motion time point $T_1$, a space point $b$ of the target object may be displaced, e.g., moving from $b'$ to $b''$ in the image domain. In the coordinate system of the reference image, and a coordinate of pixel point $b'$ corresponding to the space point $b$ in the heart coronary artery reference model may be $(x_{b'}, y_{b'}, z_{b'})$, a coordinate of the pixel point $b''$ corresponding to the space point $b$ in the heart coronary motion model may be $(x_{b''}, y_{b''}, z_{b''})$. A displacement may be represented by a motion vector

$\overrightarrow{b'b''} = (x_{b''} - x_{b'}, y_{b''} - y_{b'}, z_{b''} - z_{b'})$, which means that at motion time point $T_1$, a motion vector of the space point $b$ in the image domain may be $\overrightarrow{b'b''}$.

From reference time point $T_0$ to motion time point $T_1$, there may be a plurality of other space points of the target object that may be displaced, for example, space points $c, d, e, ....$ Thus, a motion vector field $F_1$ of the target object at motion time point $T_1$ may include motion vectors $\overrightarrow{a'a''}, \overrightarrow{b'b''}, \overrightarrow{c'c''}, \overrightarrow{d'd''} ...$ . For example,

$F_1 = (\overrightarrow{a'a''}, \overrightarrow{b'b''}, \overrightarrow{c'c''}, \overrightarrow{d'd''}, ...)$ . Similarly, the processing device 110 (e.g., the motion vector field determination unit) may determine a motion vector field $F_2$ of the target object at motion time point $T_2$, a motion vector field $F_3$ of the target object at t motion time point $T_3$, ..., a motion vector field $F_n$ of the target object at motion time point $T_n$.

In some embodiments, in operation 830, the processing device 110 may determine the multiple motion vector fields based on an iterative algorithm instead of the registration. For example, the iterative algorithm may be related to an objective function. The processing device 110 may determine the multiple motion vector fields according to an objective function as follows:

$$\underset{M_i}{argmin} \sum_{i \in [t_a, t_b]} (p_i - FP(I_0 + g_{I_0} \cdot M_i))^2 + R(I_0, M_i),$$

where $M_i$ represents a motion vector field at an ith time point, $p_i$ represents raw data acquired at a motion time point corresponding to the motion vector field at the ith time point, $I_0$ represents the reference image, g represents an image gradient including gradients along with three directions (e.g., x, y, and z directions), and R represents a regularization constraint function. The processing device 110 may determine an optimal motion vector field by solving the objective function and designate the optimal motion vector as the ith motion vector field.

FIG. 9 is a schematic diagram illustrating an exemplary process for raw data correction according to some embodiments of the present disclosure. In some embodiments, one or more operations of process 900 illustrated in FIG. 9 may be implemented in the image correction system 100 illustrated in FIG. 1. For example, process 900 illustrated in FIG. 9 may be stored in the storage device 130 in the form of instructions, and invoked and/or executed by the processing device 110 In some embodiments, operation 740 in FIG. 7 may be achieved by operations of process 900.

In 910, for scanning data (e.g., a set of raw sub-data) acquired within a period of any two motion time points (e.g., two consecutive motion time points), a first weight and a second weight may be determined based on a correction time point (also referred to as a target motion time point) corresponding to the scanning data and the two motion time points. In some embodiments, operation 910 may be performed by the processing device 110 (e.g., the correction module 420).

The two consecutive motion time points may refer to any two adjacent motion time points in the multiple motion time points of the imaging process. For example, the two adjacent motion time points may include time point $T_1$ (e.g., a 1st second) and time point $T_2$ (e.g., a 2nd second), time point $T_2$ (e.g., a 2nd second) and time point $T_3$ (e.g., a 3rd second), or the like.

The correction time point (i.e., the target motion time point) may be a time point within the period between the two consecutive motion time points. For example, a correction time point or a target motion time point between time point $T_1$ and time point $T_2$ may include time point $T_x$.

As mentioned above, a motion time point may be a time point selected at intervals from the plurality of time points of the imaging process and used as a time point for correction of scanning data acquired at the motion time point. Accordingly, the processing device 110 (e.g., the correction module 430) may correct scanning data corresponding to each correction time point (e.g., the set of raw sub-data corresponding to the target time point) in the period between the two consecutive motion time points based on raw data deviations corresponding to the two consecutive motion time points.

The first weight may refer to a proportion of a correction effect of a raw data deviation corresponding to a motion time point before the correction time point on the scanning data corresponding to the correction time point. As shown in FIG. 9, a motion time point before correction time point $T_x$ may be $T_1$, a first weight $\alpha_{1x}$ may be a proportion of a correction effect of a raw data deviation at time point $T_1$ on the scanning data corresponding to correction time point $T_x$.

The second weight may refer to a proportion of a correction effect of a raw data deviation corresponding to a motion time point after the correction time point on the scanning data corresponding to the correction time point. As shown in FIG. 9, a motion time point after correction time point $T_x$ may be $T_2$, and a second weight $\alpha_{2x}$ may be a proportion of a correction effect of a raw data deviation at time point $T_2$ on the scanning data corresponding to correction time point $T_x$.

It should be understood that raw data deviations corresponding to any two consecutive motion time points may have different correction effects on the scanning data corresponding to different correction time points, i.e., different correction time points may correspond to different first weights and/or second weights. The smaller a time difference between the correction time point and a motion time point before it and the larger a time difference between the correction time point and a motion time point after it, the larger the first weight and the smaller the second weight, and vice versa.

In some embodiments, the processing device 110 (e.g., the correction module 430) may determine the first weight and the second weight corresponding to the correction time point based on the two consecutive motion time points and the correction time point. For example, the processing device 110 (e.g., the correction module 430) may determine a motion time length (also referred to as a motion duration) based on the two motion time points (e.g., any two consecutive motion time points). The processing device 110 may determine a first time length (also referred to as a first duration) between the correction time point and one of the two motion time points. The processing device 110 may determine a second time length (also referred to as a second duration) between the correction time point and the other one of the two motion time points. The processing device 110 may determine the first weight based on the first duration and the motion duration (e.g., based on a ratio of the first time length and the motion time length). The processing device 110 may determine the second weight based on the second duration and the motion duration (e.g., based on a ratio of the second time length to the motion time length).

As shown in FIG. 9, the correction time point between two consecutive motion time points $T_1$ and $T_2$ may be $T_x$. The processing device 110 may determine the motion time length of the two consecutive motion time points $T_1$ and $T_2$ as $T_2 - T_1$. The processing device 110 may determine, based on a time difference between correction time point $T_x$ and motion time point $T_2$, the first time length as $T_2 - T_x$. The processing device 110 may determine, based on a time difference between correction time point $T_x$ and motion time point $T_1$, the second time length may be $T_x - T_1$. The processing device 110 may determine, based on a ratio of the first time length $T_2 - T_x$ and the motion time length $T_2 - T_1$, the first weight $\alpha_{1x}$ as $\frac{T_2 - T_x}{T_2 - T_1}$,

i.e., $\alpha_{1x} = \frac{T_2 - T_x}{T_2 - T_1}$. The processing device 110 may determine, based on the ratio of the second time length $T_x - T_1$ and the

motion time length $T_2 - T_1$, the second weight $\alpha_{2x}$ as $\frac{T_x - T_1}{T_2 - T_1}$, i.e., $\alpha_{2x} = \frac{T_x - T_1}{T_2 - T_1}$. For example, if $T_1 = 0.1$ s, $T_2 = 0.6$ s, $T_x = 0.3$ s, then $\alpha_{1x} = 0.6$ and $\alpha_{2x} = 0.4$.

In 920, one or more correction values corresponding to the correction time point may be determined based on the first weight, the second weight, and the two raw data deviations corresponding to the two motion time points. In some embodiments, operation 920 may be performed by the processing device 110 (e.g., the correction module 430).

A correction value may be a value for correcting the scanning data (or the raw data). It should be understood that correction values(s) corresponding to a motion time point may be a raw data deviation corresponding to the motion time point.

As mentioned above, displacements of the target object may be continuous and uneven. In order to improve the efficiency of correction, the displacement of the target object at each time point may be estimated based on displacements of the target object at close time points before and after the each time point. Therefore, in some embodiments, the processing device 110 (e.g., the correction module 430) may determine a correction value corresponding to the correction time point based on the two raw data deviations corresponding to the two consecutive motion time points before and after the correction time point (i.e., two correction values corresponding to the two consecutive motion time points). For example, the processing device 110 (e.g., the correction module 430) may determine, based on the first weight and a raw data deviation corresponding to a motion time point before the correction time point, a correction effect of the raw data deviation corresponding to the motion time point before the correction time point on the scanning data corresponding to the correction time point. The processing device 110 may determine, based on the second weight and a raw data deviation corresponding to a motion time point after the correction time point, a correction effect of the raw data deviation corresponding to the motion time point after the correction time point on the scanning data corresponding to the correction time point. The processing device 110 may determine the correction value corresponding to the correction time point based on a sum of correction effects of the raw data deviations corresponding to the motion time points before and after the correction time point on the scanning data corresponding to the correction time point. As shown in FIG. 9, motion time points before and after the correction time point $T_x$ may be $T_1$ and $T_2$ respectively. The processing device 110 may determine the correction value corresponding to the correction time point $T_x$ by determining a weighted sum of the first weight $\alpha_{1x}$ and the raw data deviation corresponding to time point $T_1$, and the second weight $\alpha_{2x}$ and the raw data deviation corresponding to time point $T_2$, respectively.

In 930, corrected data (e.g., a set of corrected raw sub-data) corresponding to the correction time point may be generated by correcting, based on the corrected value corresponding to the correction time point, the scanning data (i.e., the set of raw sub-data) corresponding to the correction time point. In some embodiments, operation 930 may be performed by the processing device 110 (e.g., the correction module 430).

As described above, corrected data may be corrected scanning data. In some embodiments, for scanning data corresponding to each of the multiple time points, the processing device 110 (e.g., the correction module 430) may determine corrected data corresponding to the motion time point by determining a difference between the scanning data corresponding to the motion time point and a correction value corresponding to the motion time point. As shown in FIG. 9, the processing device 110 (e.g., the correction module 430) may determine corrected data corresponding to the correction time point $T_x$ by determining a difference between scanning data corresponding to the correction time point $T_x$ and the correction value corresponding to the correction time point $T_x$.

In some embodiments, the processing device 110 may determine the corrected data corresponding to the motion time point by determining a difference between the scanning data corresponding to the motion time point and a raw data deviation corresponding to the motion time point. For example, the processing device 110 may determine corrected data at time point $T_1$ by determining a difference between the scan data at the $T_1$ time point and a raw data deviation at the $T_1$ time point.

In some embodiments, in operation 910, the processing device 110 may determine the first weight and the second weight based on electrocardiograph (ECG) signals corresponding to the target motion time point and the two motion time points (e.g., a first motion time point earlier than the target motion time point and a second motion time point later than the target motion time point). For example, the processing device 110 may determine first ECG gradient signals from the first motion time point to the target motion time point. The first ECG gradient signals may correspond to a first gradient that is represented by a slop of an ECG curve determined based on the ECG signals from the first motion time point to the target motion time point. The processing device 110 may determine second ECG gradient signals (e.g., a second slope) from the target motion time point to the second motion time point. The second ECG gradient signals may correspond to a second gradient that is represented by a slop of an ECG curve determined based on the ECG signals from the target motion time point to the second motion time point. The first gradient may reflect a motion rate of the target object during a period between the first motion time point and the target motion time point. The second gradient may reflect a motion rate of the target object during a period between the target motion time point and the second motion time point. The greater a gradient/slope is, the faster a motion rate corresponding to the gradient may be, and the less a corresponding weight may be. The processing device 110 may determine the first weight and the second weight based on the first gradient and the second gradient. If the first gradient is greater than the second gradient, the processing device 110 may determine the first weight to be less than the second weight. In some embodiments, the processing device 110 may determine the correction value corresponding to the target motion time point based on the first weight and the second weight. For instance, the processing device 110 may determine a motion vector field corresponding to the target motion time point by determining, based on the first weight and the second weight, a weighted sum of motion vector fields at the two motion time points. The processing device 110 may determine an inverse motion vector field (also referred to as an MVF_inverse) by performing an inverse operation on the motion vector field corresponding to the target motion time point. The processing device 110 may determine a transformed image by applying the inverse motion vector field to a reconstructed image at the target motion time point. The processing device 110 may determine the correction value corresponding to the target motion time point by performing forward projection on an image difference between the reconstructed image at the target motion time point and the transformed image of the reconstructed image. In some embodiments, a sum of the weights corresponding to different motion vector fields that are used for determining the correction value at the target motion time point may be equal to 1. For example, a sum of the first weight and the second weight may be 1. In some embodiments, the processing device 110 may determine the correction value corresponding to the target motion time point by determining a Sigmoid function weighted sum of the raw data deviations and the weights corresponding to the raw data deviations. The Sigmoid function may include a logarithmic function, a Gaussian function, etc. Two weights corresponding to two motion time points that are centered by the target motion time point may be equal to each other.

Having thus described the basic concepts, it may be rather apparent to those skilled in the art after reading this detailed disclosure that the foregoing detailed disclosure is intended to be presented by way of example only and is not limiting. Various alterations, improvements, and modifications may occur and are intended to those skilled in the art, though not expressly stated herein. These alterations, improvements, and modifications are intended to be suggested by this disclosure, and are within the spirit and scope of the exemplary embodiments of this disclosure.

In closing, it is to be understood that the embodiments of the application disclosed herein are illustrative of the principles of the embodiments of the application and the invention is defined by the appended claims.

**Claims**

1. A system for image correction, comprising:

at least one storage device including a set of instructions;
at least one processor configured to communicate with the at least one storage device, wherein when executing the set of instructions, the at least one processor is configured to direct the system to perform operations including:

obtaining (610) a first image of a target object, wherein

the first image includes original scanning data acquired by an imaging device used to scan the target object during an imaging process or an image reconstructed based on the original scanning data; and
the first image corresponds to a target phase of a motion of the target object, the target phase being a phase at which the target object undergoes no motion or undergoes a motion with a minimal motion amplitude during the imaging process;

determining (620), using a preset evaluation tool, an image quality evaluation result of the first image, including:
determining, based on a trained image quality evaluation model, the image quality evaluation result of the first image, wherein the trained image quality evaluation model is associated with one or more evaluation indicators, the one or more evaluation indicators including at least one of an anatomical sharpness, a contrast of the target region, a morphological fit degree of the target region, an enhancement degree of the target region, an image signal uniformity, an image noise level, or an artifact inhibition degree; and
in response to determining (630) that the image quality evaluation result of the first image does not satisfy a preset condition, correcting the first image using a correction algorithm, wherein

the correction algorithm includes a noise processing algorithm or an algorithm for removing or reducing artifacts; and
the correcting the first image using a correction algorithm includes:

determining (710), based on the target phase, at least two motion vector fields of the target object corresponding to at least two sub-phases related to the target phase, the at least two sub-phases corresponding to two time points in the target phase;
for each of the at least two sub-phases,

determining (720) an image motion deviation corresponding to the sub-phase based on a motion vector field corresponding to the sub-phase and a reconstructed image corresponding to the sub-phase; and
determining (730) a raw data deviation corresponding to the sub-phase based on the image motion deviation corresponding to the sub-phase; and

generating (740) corrected raw data corresponding to the target phase by correcting, based on raw data deviations corresponding to the at least two sub-phases, raw data corresponding to the target phase, the raw data being original scanning data acquired from the imaging device before image reconstruction.

2. The system of claim 1, wherein the determining, using a preset evaluation tool, an image quality evaluation result of the first image includes:

determining, based on the first image, a second image of a target region of the target object; and a second image of a target region of the target object; and

determining, based on the second image using the preset evaluation tool, the image quality evaluation result of the first image.

3. The system of claim 2, wherein the determining, based on the first image, a second image of a target region of the target object includes:

determining, based on the first image using an image segmentation algorithm, the second image of the target region of the target object.

4. The system of claim 2 or 3, wherein the target region includes a coronary artery.

5. The system of claim 4, wherein the image quality evaluation result of the first image includes a comprehensive evaluation result of a morphological fit degree of the coronary artery and an enhancement degree of the coronary artery.

6. The system of any one of claims 1-5, wherein the operations further comprise:

obtaining (640) the corrected first image;

determining (650), using the preset evaluation tool, an image quality evaluation result of the corrected first image; and

in response to determining (660) that the image quality evaluation result of the corrected first image does not satisfy the preset condition, sending (663) a prompt to a user.

7. The system of any one of claims 1-6, wherein the operations further comprise:

determining the correction algorithm based on the image quality evaluation result of the first image and/or the preset evaluation tool.

8. The system of any one of claims 1-7, wherein the operations further comprise:

obtaining (502) raw data of the target object;

determining (504), based on the raw data of the target object, the target phase; and

generating (506) the first image corresponding to the target phase.

9. The system of claim 8, wherein the raw data of the target object includes multiple sets of raw sub-data acquired at multiple phases corresponding to multiple time points of the imaging process, and the determining, based on the raw data of the target object, the target phase includes:

generating, based on the raw data of the target object, multiple images corresponding to the multiple phases;

determining, based on the multiple images and a global criterion, candidate phases from the multiple phases;

determining a quality assessment of a target region in each of images corresponding to the candidate phases; and

determining, based on the quality assessments, the target phase from the candidate phases.

10. The system of claim 8 or 9, wherein the correcting the first image using a correction algorithm includes:

obtaining a first raw data deviation corresponding to a first sub-phase related to the target phase;

obtaining a second raw data deviation corresponding to a second sub-phase related to the target phase;

generating a set of corrected raw sub-data of the target object corresponding to the target phase by correcting, based on the first raw data deviation and the second raw deviation, a set of raw sub-data of the target object corresponding to the target phase.

11. The system of claim 10, wherein

the obtaining the first raw data deviation corresponding to a first sub-phase related to the target phase includes:

obtaining a first image motion deviation corresponding to the first sub-phase; and
determining, based on the first image motion deviation, the first raw data deviation corresponding to the first sub-phase; and

the obtaining the second raw data deviation corresponding to a second sub-phase related to the target phase includes:

obtaining a second image motion deviation corresponding to the second sub-phase; and
determining, based on the second image motion deviation, the second raw data deviation corresponding to the second sub-phase.

12. The system of claim 11, wherein

the obtaining a first image motion deviation corresponding to the first sub-phase includes:

obtaining a first motion vector field corresponding to the first sub-phase; and
determining, based on the first motion vector field corresponding to the first sub-phase and a first reconstructed image corresponding to the first sub-phase, the first image motion deviation corresponding to the first sub-phase; and

the obtaining a second image motion deviation corresponding to the second sub-phase includes:

obtaining a second motion vector field corresponding to the second sub-phase; and
determining, based on the second motion vector field corresponding to the second sub-phase and a second reconstructed image corresponding to the second sub-phase, the second image motion deviation corresponding to the second sub-phase.

13. The system of any one of claims 10-12, wherein the second sub-phase is later than the first sub-phase.

**Patentansprüche**

1. Bildkorrektursystem, umfassend:

mindestens eine Speichervorrichtung, die einen Satz von Anweisungen einschließt;
mindestens einen Prozessor, der dazu konfiguriert ist, mit der mindestens einen Speichervorrichtung in Kommunikation zu stehen, wobei beim Ausführen des Satzes von Anweisungen der mindestens eine Prozessor dazu konfiguriert ist, das System anzuweisen, Operationen durchzuführen, die Folgendes einschließen:

Erhalten (610) eines ersten Bildes eines Zielobjekts, wobei

das erste Bild ursprüngliche Scandaten, die von einer Bildgebungsvorrichtung erhoben werden, die zum Scannen des Zielobjekts während eines Bildgebungsprozesses verwendet wird, oder ein Bild, das basierend auf den ursprünglichen Scandaten rekonstruiert wird, einschließt; und
das erste Bild einer Zielphase einer Bewegung des Zielobjekts entspricht, wobei die Zielphase eine Phase ist, in der das Zielobjekt während des Bildgebungsprozesses keine Bewegung erfährt oder eine Bewegung mit minimaler Bewegungsamplitude erfährt;

Bestimmen (620), unter Verwendung eines voreingestellten Bewertungswerkzeugs, eines Bildqualitätsbewertungsergebnisses des ersten Bildes, das Folgendes einschließt:
Bestimmen des Bildqualitätsbewertungsergebnisses des ersten Bildes basierend auf einem trainierten Bildqualitätsbewertungsmodell, wobei das trainierte Bildqualitätsbewertungsmodell einem oder mehreren Bewertungsindikatoren zugeordnet ist, wobei der eine oder die mehreren Bewertungsindikatoren mindestens eines von einer anatomischen Schärfe, einem Kontrast des Zielbereichs, einem morphologischem Anpassungsgrad des Zielbereichs, einem Verstärkungsgrad des Zielbereichs, einer Bildsignalgleichförmigkeit, einem Bildrauschpegel oder einem Artefaktunterdrückungsgrad einschließen; und

als Reaktion auf das Bestimmen (630), dass das Bildqualitätsbewertungsergebnis des ersten Bildes eine voreingestellte Bedingung nicht erfüllt, Korrigieren des ersten Bildes unter Verwendung eines Korrekturalgorithmus, wobei

der Korrekturalgorithmus einen Rauschverarbeitungsalgorithmus oder einen Algorithmus zum Entfernen oder Reduzieren von Artefakten einschließt; und
das Korrigieren des ersten Bildes unter Verwendung eines Korrekturalgorithmus Folgendes einschließt:

Bestimmen (710) basierend auf der Zielphase von mindestens zwei Bewegungsvektorfeldern des Zielobjekts, die mindestens zwei mit der Zielphase zusammenhängenden Teilphasen entsprechen, wobei die mindestens zwei Teilphasen zwei Zeitpunkten in der Zielphase entsprechen;
für jede der mindestens zwei Teilphasen,

Bestimmen (720) einer Bildbewegungsabweichung, die der Teilphase entspricht, basierend auf einem Bewegungsvektorfeld, das der Teilphase entspricht, und einem rekonstruierten Bild, das der Teilphase entspricht; und
Bestimmen (730) einer Rohdatenabweichung, die der Teilphase entspricht, basierend auf der Bildbewegungsabweichung, die der Teilphase entspricht; und

Erzeugen (740) von korrigierten Rohdaten, die der Zielphase entsprechen, indem basierend auf Rohdatenabweichungen, die den mindestens zwei Teilphasen entsprechen, Rohdaten, die der Zielphase entsprechen, korrigiert werden, wobei die Rohdaten ursprüngliche Scandaten sind, die vor der Bildrekonstruktion von der Bildgebungsvorrichtung erhoben werden.

2. System nach Anspruch 1, wobei das Bestimmen eines Bildqualitätsbewertungsergebnisses des ersten Bildes unter Verwendung eines voreingestellten Bewertungswerkzeugs Folgendes einschließt:

Bestimmen, basierend auf dem ersten Bild, eines zweiten Bildes eines Zielbereichs des Zielobjekts; und eines zweiten Bildes eines Zielbereichs des Zielobjekts; und
Bestimmen, basierend auf dem zweiten Bild unter Verwendung des voreingestellten Bewertungswerkzeugs, des Bildqualitätsbewertungsergebnisses des ersten Bildes.

3. System nach Anspruch 2, wobei das Bestimmen eines zweiten Bildes eines Zielbereichs des Zielobjekts basierend auf dem ersten Bild Folgendes einschließt:
Bestimmen des zweiten Bildes des Zielbereichs des Zielobjekts basierend auf dem ersten Bild unter Verwendung eines Bildsegmentierungsalgorithmus.

4. System nach Anspruch 2 oder 3, wobei der Zielbereich eine Koronararterie einschließt.

5. System nach Anspruch 4, wobei das Bildqualitätsbewertungsergebnis des ersten Bildes ein umfassendes Bewertungsergebnis eines morphologischen Anpassungsgrades der Koronararterie und eines Verstärkungsgrades der Koronararterie einschließt.

6. System nach einem der Ansprüche 1 bis 5, wobei die Operationen weiter Folgendes umfassen:

Erhalten (640) des korrigierten ersten Bildes;
Bestimmen (650), unter Verwendung des voreingestellten Bewertungswerkzeugs, eines Bildqualitätsbewertungsergebnisses des korrigierten ersten Bildes; und
als Reaktion auf das Bestimmen (660), dass das Bildqualitätsbewertungsergebnis des korrigierten ersten Bildes die voreingestellte Bedingung nicht erfüllt, Senden (663) einer Aufforderung an einen Benutzer.

7. System nach einem der Ansprüche 1 bis 6, wobei die Operationen weiter Folgendes umfassen:
Bestimmen des Korrekturalgorithmus basierend auf dem Bildqualitätsbewertungsergebnis des ersten Bildes und/oder des voreingestellten Bewertungswerkzeugs.

8. System nach einem der Ansprüche 1 bis 7, wobei die Operationen weiter Folgendes umfassen:

Erhalten (502) von Rohdaten des Zielobjekts;

Bestimmen (504) der Zielphase basierend auf den Rohdaten des Zielobjekts; und
Erzeugen (506) des ersten Bildes, das der Zielphase entspricht.

9. System nach Anspruch 8, wobei die Rohdaten des Zielobjekts mehrere Sätze von Rohteildaten einschließen, die in mehreren Phasen gemäß mehreren Zeitpunkten des Bildgebungsprozesses erhoben werden, und das Bestimmen der Zielphase basierend auf den Rohdaten des Zielobjekts Folgendes einschließt:

Erzeugen mehrerer Bilder, die den mehreren Phasen entsprechen, basierend auf den Rohdaten des Zielobjekts;
Bestimmen von Kandidatenphasen aus den mehreren Phasen basierend auf den mehreren Bildern und einem globalen Kriterium;
Bestimmen einer Qualitätsbeurteilung eines Zielbereichs in jedem der Bilder, die den Kandidatenphasen entsprechen; und
Bestimmen der Zielphase aus den Kandidatenphasen basierend auf der Qualitätsbeurteilung.

10. System nach Anspruch 8 oder 9, wobei die Korrektur des ersten Bildes unter Verwendung eines Korrekturalgorithmus Folgendes einschließt:

Erhalten einer ersten Rohdatenabweichung, die einer ersten, mit der Zielphase zusammenhängenden Teilphase entspricht;
Erhalten einer zweiten Rohdatenabweichung, die einer zweiten, mit der Zielphase zusammenhängenden Teilphase entspricht;
Erzeugen eines Satzes von korrigierten Rohteildaten des Zielobjekts, die der Zielphase entsprechen, indem basierend auf der ersten Rohdatenabweichung und der zweiten Rohdatenabweichung ein Satz von Rohteildaten des Zielobjekts, die der Zielphase entsprechen, korrigiert wird.

11. System nach Anspruch 10, wobei

das Erhalten der ersten Rohdatenabweichung, die einer ersten, mit der Zielphase zusammenhängenden Teilphase entspricht, Folgendes einschließt:

Erhalten einer ersten Bildbewegungsabweichung, die der ersten Teilphase entspricht; und
Bestimmen der ersten Rohdatenabweichung, die der ersten Teilphase entspricht, basierend auf der ersten Bildbewegungsabweichung; und

das Erhalten der zweiten Rohdatenabweichung, die einer zweiten, mit der Zielphase zusammenhängenden Teilphase entspricht, Folgendes einschließt:

Erhalten einer zweiten Bildbewegungsabweichung, die der zweiten Teilphase entspricht; und
Bestimmen der zweiten Rohdatenabweichung, die der zweiten Teilphase entspricht, basierend auf der zweiten Bildbewegungsabweichung.

12. System nach Anspruch 11, wobei

das Erhalten einer ersten Bildbewegungsabweichung, die der ersten Teilphase entspricht, Folgendes einschließt:

Erhalten eines ersten Bewegungsvektorfeldes, das der ersten Teilphase entspricht; und
Bestimmen basierend auf dem ersten Bewegungsvektorfeld, das der ersten Teilphase entspricht, und einem ersten rekonstruierten Bild, das der ersten Teilphase entspricht,

der ersten Bildbewegungsabweichung, die der ersten Teilphase entspricht; und
das Erhalten einer zweiten Bildbewegungsabweichung, die der zweiten Teilphase entspricht, Folgendes einschließt:

Erhalten eines zweiten Bewegungsvektorfeldes, das der zweiten Teilphase entspricht; und
Bestimmen, basierend auf dem zweiten Bewegungsvektorfeld, das der zweiten Teilphase entspricht, und einem zweiten rekonstruierten Bild, das der zweiten Teilphase entspricht, der zweiten Bildbewegungsabweichung, die der zweiten Teilphase entspricht.

**13.** System nach einem der Ansprüche 10-12, wobei die zweite Teilphase später als die erste Teilphase ist.

**Revendications**

**1.** Système de correction d'image, comprenant :

au moins un dispositif de stockage incluant un ensemble d'instructions ;
au moins un processeur configuré pour communiquer avec le au moins un dispositif de stockage, dans lequel, lors de l'exécution de l'ensemble d'instructions, le au moins un processeur est configuré pour ordonner au système de réaliser des opérations incluant :

l'obtention (610) d'une première image d'un objet cible, dans lequel

la première image inclut des données de balayage d'origine acquises par un dispositif d'imagerie utilisé pour balayer l'objet cible pendant un processus d'imagerie ou une image reconstruite à partir des données de balayage d'origine ; et
la première image correspond à une phase cible d'un mouvement de l'objet cible, la phase cible étant une phase au cours de laquelle l'objet cible ne subit aucun mouvement ou subit un mouvement avec une amplitude de mouvement minimale pendant le processus d'imagerie ;

la détermination (620), à l'aide d'un outil d'évaluation prédéfini, d'un résultat d'évaluation de qualité d'image de la première image, incluant :
la détermination, sur la base d'un modèle d'évaluation de qualité d'image entraîné, du résultat d'évaluation de qualité d'image de la première image, dans lequel le modèle d'évaluation de qualité d'image entraîné est associé à un ou plusieurs indicateurs d'évaluation, les un ou plusieurs indicateurs d'évaluation incluant au moins un d'une netteté anatomique, d'un contraste de la région cible, d'un degré d'ajustement morphologique de la région cible, d'un degré d'amélioration de la région cible, d'une uniformité de signal d'image, d'un niveau de bruit d'image ou d'un degré d'inhibition d'artefact ; et
à la suite de la détermination (630) que le résultat d'évaluation de qualité d'image de la première image ne remplit pas une condition prédéfinie, la correction de la première image à l'aide d'un algorithme de correction, dans lequel

l'algorithme de correction inclut un algorithme de traitement du bruit ou un algorithme de suppression ou de réduction d'artefacts ; et
la correction de la première image à l'aide d'un algorithme de correction inclut :

la détermination (710), sur la base de la phase cible, d'au moins deux champs de vecteurs de mouvement de l'objet cible correspondant à au moins deux sous-phases liées à la phase cible, les au moins deux sous-phases correspondant à deux points temporels dans la phase cible ;
pour chacune des au moins deux sous-phases,

la détermination (720) d'un écart de mouvement d'image correspondant à la sous-phase sur la base d'un champ de vecteurs de mouvement correspondant à la sous-phase et d'une image reconstruite correspondant à la sous-phase ; et
la détermination (730) d'un écart de données brutes correspondant à la sous-phase sur la base de l'écart de mouvement d'image correspondant à la sous-phase ; et

la génération (740) de données brutes corrigées correspondant à la phase cible en corrigeant, sur la base des écarts de données brutes correspondant à les au moins deux sous-phases, de données brutes correspondant à la phase cible, les données brutes étant des données de balayage d'origine acquises à partir du dispositif d'imagerie avant une reconstruction d'image.

**2.** Système selon la revendication 1, dans lequel la détermination, à l'aide d'un outil d'évaluation prédéfini, d'un résultat d'évaluation de qualité d'image de la première image inclut :

la détermination, sur la base de la première image, d'une seconde image d'une région cible de l'objet cible ; et
d'une seconde image d'une région cible de l'objet cible ; et

la détermination, sur la base de la seconde image à l'aide de l'outil d'évaluation prédéfini, du résultat d'évaluation de qualité d'image de la première image.

3. Système selon la revendication 2, dans lequel la détermination, sur la base de la première image, d'une seconde image d'une région cible de l'objet cible inclut :
la détermination, sur la base de la première image à l'aide d'un algorithme de segmentation d'image, de la seconde image de la région cible de l'objet cible.

4. Système selon la revendication 2 ou 3, dans lequel la région cible inclut une artère coronaire.

5. Système selon la revendication 4, dans lequel le résultat d'évaluation de qualité d'image de la première image inclut un résultat d'évaluation complet d'un degré d'ajustement morphologique de l'artère coronaire et d'un degré d'amélioration de l'artère coronaire.

6. Système selon l'une quelconque des revendications 1-5, dans lequel les opérations comprennent en outre :

l'obtention (640) de la première image corrigée ;
la détermination (650), à l'aide de l'outil d'évaluation prédéfini, d'un résultat d'évaluation de qualité d'image de la première image corrigée ; et
à la suite de la détermination (660) que le résultat d'évaluation de qualité d'image de la première image corrigée ne remplit pas la condition prédéfinie, l'envoi (663) d'une invite à un utilisateur.

7. Système selon l'une quelconque des revendications 1-6, dans lequel les opérations comprennent en outre :
la détermination de l'algorithme de correction sur la base du résultat d'évaluation de qualité d'image de la première image et/ou de l'outil d'évaluation prédéfini.

8. Système selon l'une quelconque des revendications 1-7, dans lequel les opérations comprennent en outre :

l'obtention (502) de données brutes de l'objet cible ;
la détermination (504), sur la base des données brutes de l'objet cible, de la phase cible ; et
la génération (506) de la première image correspondant à la phase cible.

9. Système selon la revendication 8, dans lequel les données brutes de l'objet cible incluent de multiples ensembles de sous-données brutes acquises à de multiples phases correspondant à plusieurs points temporels du processus d'imagerie et la détermination, sur la base des données brutes de l'objet cible, de la phase cible inclut :

la génération, sur la base des données brutes de l'objet cible, de multiples images correspondant aux multiples phases ;
la détermination, sur la base des multiples images et d'un critère global, de phases candidates parmi les multiples phases ;
la détermination d'une évaluation de qualité d'une région cible dans chacune d'images correspondant aux phases candidates ; et
la détermination, sur la base des évaluations de qualité, de la phase cible parmi les phases candidates.

10. Système selon la revendication 8 ou 9, dans lequel la correction de la première image à l'aide d'un algorithme de correction inclut :

l'obtention d'un premier écart de données brutes correspondant à une première sous-phase liée à la phase cible ;
l'obtention d'un second écart de données brutes correspondant à une seconde sous-phase liée à la phase cible ;
la génération d'un ensemble de sous-données brutes corrigées de l'objet cible correspondant à la phase cible en corrigeant, sur la base du premier écart de données brutes et du second écart de données brutes, un ensemble de sous-données brutes de l'objet cible correspondant à la phase cible.

11. Système selon la revendication 10, dans lequel

l'obtention du premier écart de données brutes correspondant à une première sous-phase liée à la phase cible inclut :

l'obtention d'un premier écart de mouvement d'image correspondant à la première sous-phase ; et
la détermination, à partir du premier écart de mouvement d'image, du premier écart de données brutes correspondant à la première sous-phase ; et

l'obtention du second écart de données brutes correspondant à une seconde sous-phase liée à la phase cible inclut :

l'obtention d'un second écart de mouvement d'image correspondant à la seconde sous-phase ; et
la détermination, sur la base du second écart de mouvement d'image, du second écart de données brutes correspondant à la seconde sous-phase.

12. Système selon la revendication 11, dans lequel

l'obtention d'un premier écart de mouvement d'image correspondant à la première sous-phase inclut :

l'obtention d'un premier champ de vecteurs de mouvement correspondant à la première sous-phase ; et
la détermination, sur la base du premier champ de vecteurs de mouvement correspondant à la première sous-phase et d'une première image reconstruite correspondant à la première sous-phase,

du premier écart de mouvement d'image correspondant à la première sous-phase ; et
l'obtention d'un second écart de mouvement d'image correspondant à la seconde sous-phase inclut ;

l'obtention d'un second champ de vecteurs de mouvement correspondant à la seconde sous-phase ; et
la détermination, sur la base du second champ de vecteurs de mouvement correspondant à la seconde sous-phase et d'une seconde image reconstruite correspondant à la seconde sous-phase, du second écart de mouvement d'image correspondant à la seconde sous-phase.

13. Système selon l'une quelconque des revendications 10-12, dans lequel la seconde sous-phase est postérieure à la première sous-phase.

100

FIG. 1

FIG. 2

300

| Communication Platform |
| :---: |
| 310 |

| Display |
| :---: |
| 320 |

| GPU |
| :---: |
| 330 |

| CPU |
| :---: |
| 340 |

| OS |
| :---: |
| 370 |

| App(s) |
| :---: |
| 380 |

Memory 360

| I/O |
| :---: |
| 350 |

| Storage |
| :---: |
| 390 |

**FIG. 3**

110

| Obtaining Module | 410 |
| :---: | :---: |

| Determination Module | 420 |
| :---: | :---: |

| Correction Module | 430 |
| :---: | :---: |

| Reconstruction Module | 440 |
| :---: | :---: |

**FIG. 4**

**500**

```
┌─────────────────────────────────────────────────────────────┐
│         Obtaining raw data of a target object                │  502
└─────────────────────────────────────────────────────────────┘
                            │
                            ▼
┌─────────────────────────────────────────────────────────────┐
│  Determining, based on the raw data of the target object,    │  504
│                   a target phase                             │
└─────────────────────────────────────────────────────────────┘
                            │
                            ▼
┌─────────────────────────────────────────────────────────────┐
│  Generating a first image corresponding to the phase of      │  506
│                      interest                                │
└─────────────────────────────────────────────────────────────┘
                            │
                            ▼
┌─────────────────────────────────────────────────────────────┐
│  Determining, using a preset algorithm, an image quality     │  508
│       evaluation result of the first image                   │
└─────────────────────────────────────────────────────────────┘
                            │
                            ▼
Yes ◄──────< Determining whether the image quality evaluation  >  510
             result of the first image satisfies a preset
             condition?
                            │ No
                            ▼
┌─────────────────────────────────────────────────────────────┐
│  Generating a set of corrected raw sub-data of the target    │  512
│  object corresponding to the target phase by correcting a    │
│  set of raw sub-data of the target object corresponding to   │
│                   the target phase                           │
└─────────────────────────────────────────────────────────────┘
                            │
                            ▼
┌─────────────────────────────────────────────────────────────┐
│  Generating, based on the set of corrected raw sub-data of   │  514
│  the target object, a corrected image corresponding to the   │
│                     first image                              │
└─────────────────────────────────────────────────────────────┘
                            │
                            ▼
                   ┌──────────────┐
                   │     End      │
                   └──────────────┘
```

**FIG. 5**

600

```
┌─────────────────────────────────────────────────────────┐
│     Obtaining a first image of the target object         │╱◠ 610
└─────────────────────────────────────────────────────────┘
                            │
                            ▼
┌─────────────────────────────────────────────────────────┐
│  Determining, using a preset tool, an image quality      │╱◠ 620
│          evaluation result of the first image            │
└─────────────────────────────────────────────────────────┘
                            │
                            ▼
Yes              ◇ Determining whether the image quality ◇   ╱◠ 630
←────────────────  evaluation result of the first image satisfies
                        a preset condition?
                            │ No
                            ▼
┌─────────────────────────────────────────────────────────┐
│   Automatically performing an image correction algorithm  │╱◠ 633
└─────────────────────────────────────────────────────────┘
                            │
                            ▼
┌─────────────────────────────────────────────────────────┐
│            Generating a corrected first image             │╱◠ 640
└─────────────────────────────────────────────────────────┘
                            │
                            ▼
┌─────────────────────────────────────────────────────────┐
│  Determining, using the preset tool, an image quality     │╱◠ 650
│     evaluation result of the corrected first image        │
└─────────────────────────────────────────────────────────┘
                            │
                            ▼
Yes              ◇ Determining whether the image quality ◇   ╱◠ 660
←────────────────  evaluation result of the corrected first
                   image satisfies the preset condition?
                            │ No
                            ▼
┌─────────────────────────────────────────────────────────┐
│              Sending a prompt to a user                  │╱◠ 663
└─────────────────────────────────────────────────────────┘
                            │
                            ▼
                      ┌──────────┐
                      │   End    │
                      └──────────┘
```

FIG. 6

**700**

Determining, based on a reference time point, multiple motion vector fields of a target object corresponding to multiple motion time points ⟶ 710

For each of the multiple motion time points, determining an image motion deviation corresponding to the motion time point based on a motion vector field corresponding to the motion time point and a reconstructed image corresponding to the motion time point ⟶ 720

For each of the multiple motion time points, determining a raw data deviation corresponding to the motion time point based on the image motion deviation corresponding to the motion time point ⟶ 730

Generating corrected raw data of the target object by correcting, based on a raw data deviation corresponding to at least one of the multiple motion time points, raw data of the target object that is acquired by imaging the target object ⟶ 740

Generating a corrected image of the target object based on the corrected raw data of the target object ⟶ 750

FIG. 7

800

Obtaining a reference image corresponding to a reference time point , wherein the reference image is generated based on a set of raw sub-data of a target object that is acquired at the reference time point

810

Obtaining multiple images each of which corresponding to one of multiple motion time points , wherein each of the multiple images is generated based on a set of raw sub-data of the target object that is acquired at the one of the multiple time points

820

Determining multiple motion vector fields by performing a registration on the reference image and the each of the multiple images

830

FIG. 8

**FIG. 9**

**FIG. 10**

**FIG. 11**

**FIG. 12**

**EP 4 330 915 B1**

**Patent documents cited in the description**

- US 8811707 B